## Europäisches Patentamt

## European Patent Office

## Office européen des brevets

(11) Veröffentlichungsnummer: **0 006 488**
**B1**

(12) # EUROPÄISCHE PATENTSCHRIFT

(45) Veröffentlichungstag der Patentschrift:
04.11.81

(51) Int. Cl.³: **G 05 B 19/02**, G 05 B 19/18, G 06 F 9/32

(21) Anmeldenummer: 79101751.0

(22) Anmeldetag: 02.06.79

(54) **Verfahren zum Ausführen eines Adressen-Sprungbefehles bei einer speicherprogrammierten Folgesteuerung für Arbeitsmaschinen, insbesondere für Industrienähmaschinen, und Folgesteuerungs-Schaltanordnung zum Ausüben des Verfahrens.**

(30) Priorität: 24.06.78 DE 2827808
22.11.78 DE 2850538

(43) Veröffentlichungstag der Anmeldung:
09.01.80 Patentblatt 80/1

(45) Bekanntmachung des Hinweises auf die Patenterteilung:
04.11.81 Patentblatt 81/44

(84) Benannte Vertragsstaaten:
AT BE CH DE FR GB IT NL SE

(56) Entgegenhaltungen:
DE-A-2 612 621
DE-B-2 703 602
US-A-3 881 172
US-A-4 075 707
ELECTRONICS, 1. Februar 1973,
New York, US;
C. L. RICHARDS: »An easy way to design complex program controllers«,
Seiten 107—113

(73) Patentinhaber: Frankl & Kirchner GmbH. & Co. KG Fabrik für Elektromotoren und elektrische Apparate,
Scheffelstrasse 73, D-6830 Schwetzingen (DE)

(72) Erfinder: Heidt, Alfred, Zähringer Strasse 59,
D-6830 Schwetzingen (DE)

(74) Vertreter: Rau, Manfred, Dr. Dipl.-Ing.,
Postfach 91 04 80 Lange Zeile 30,
D-8500 Nürnberg 91 (DE)

BUNDESDRUCKEREI BERLIN

# Verfahren zum Ausführen eines Adressen-Sprungbefehls bei einer speicherprogrammierten Folgesteuerung für Arbeitsmaschinen, insbesondere für Industrienähmaschinen, und Folgesteuerungs-Schaltanordnung zum Ausüben des Verfahrens

Die Erfindung betrifft ein Verfahren gemäß dem Oberbegriff des Patentanspruches 1 und eine Folgesteuerungs-Schaltanordnung gemäß dem Oberbegriff des Patentanspruches 7.

Ein Verfahren und seine Schaltanordnung dieser Gattung sind beschrieben in ELEKTRONIK, 1975, Heft 1, Seiten 53 bis 58, insbesondere in Abschnitt 2. Im Interesse geringen Aufwandes für den Programm-Speicher wird dort ein Verfahren und eine dieses ausübende Schaltanordnung beschrieben, die sich auf Zweifachverzweigungen beschränkt und für die Adressen-Ansteuerung des Programmspeichers mit einem parallel ladbaren Adressenzähler arbeitet. Falls zwischen zwei Programmschritten kein Sprungbefehl vorgesehen ist bzw. ein möglicher Sprungbefehl nicht vorliegt, wird der Adressenzähler auf seine nächstfolgende Zählstellung weitergeschaltet, was der Ansprache der nächstfolgenden Adresse und damit des nächstfolgenden Datensatzes im Programmspeicher entspricht. Liegt jedoch ein Sprungbefehl vor, soll also nicht der im Programmspeicher nächstfolgend abgespeicherte Datensatz wirksam werden, dann wird ein Bit der momentan erreichten, dualen Zählstellung des Adressenzählers invertiert und damit eine ganz andere Adresse abseits der normalen, schrittweisen Zählstellungsfolge im Programmspeicher angesprochen. Von der aus erfolgt das schrittweise Weiterzählen der Zählstellungen, bis abermals ein Sprungbefehl eine Zählstellungsmodifikation infolge Eingriffes in die duale Zählstellungsdarstellung und dementsprechend einen Sprung in abermals einen anderen Bereich des gesamten Zählstellungsumfanges hervorruft. Eine solche Programmspeicher-Struktur zur Ermöglichung von Programmsprüngen im Zuge von Folgesteuerungs-Programmabläufen wird als »paging« bezeichnet. Dadurch wird der erforderliche Speicherumfang sehr vergrößert, weil jeder Eingriff in die binärkodierte Adresse in ganz andere Speicherregionen führt, die vom Programmumfang her dem Speicher gar nicht zur Verfügung gestellt sein müßten. Ein solcher umfangreicher Speicher * ist zwangsläufig schlecht ausgenutzt. Soll hingegen die Belegung der verfügbaren Speicherplätze optimiert werden, dann muß ein sehr unübersichtlich abgespeicherter Programmablauf in Kauf genommen werden; und Fehlfunktionen aufgrund irrtümlicher Doppelbelegungen sind schwer zu analysieren und nur durch aufwendige Eingriffe in die Speicherbelegung zu korrigieren.

Aus der DE-A-2 703 602 ist eine für eine allgemeine Anwendung gedachte Schaltungsanordnung zum Adressieren von Sprungbefehlen in einem programmierbaren Steuerwerk bekannt, die einen Programmspeicher für die Adressen der Sprungbefehle aufweist. Die von einem Befehlszähler über eine Speicheradreßleitung adressierten Speicherwörter im Programmspeicher setzen sich aus zwei Teilworten zusammen, von denen das eine Daten oder Adressen und das andere Befehlsteile enthält. Diese Befehlsteile weisen nicht unbeträchtlichen Informationsgehalt auf und belegen deshalb auch nennenswerten Speicherplatz, weil sie in einer Schaltstufe zur binären Ansteuerung eines Multiplexers benutzt werden. Außerdem werden andere Teile der Befehls-Informationen zur Ansteuerung anderer Multiplexer und Programmverteiler in anderen Einzelheiten der Schaltung benötigt. Ohnehin stellt das Signal am Ausgang des Befehlszählers nur ein Teil der Informationen des Inhaltes eines (Doppel-)Wortes des Programmspeichers dar, das im anderen Teil Signale enthält, die einem Befehlsdekodierer zugeführt werden, der den auszuführenden Operationen zugeordnete Steuersignale, sowie weitere zur Steuerung des programmierbaren Steuerwerks erforderliche Signale erzeugt. Wird also ein Teil dieser Anteile nicht benötigt, so wird unnötig Speicherplatz verbraucht, was bei einer speicherprogrammierten Folgesteuerung, insbesondere bei Industrienähmaschinen, bei angestrebtem geringen Steueraufwand und in der Regel auch bei erwünschtem kleinen Programmumfang unvorteilhaft ist.

Aus der US-A-4 075 707 ist eine programmierbare Steuerung bekannt, bei der auf möglichst einfache Art und mit geringem Aufwand Programmabläufe auch unter Einsatz von Programmsprüngen ausführbar sind. Wesentliche Merkmale sind, daß ein jedes Wort des Programmspeichers aus zwei Teilen besteht, und zwar aus einem Daten- oder Adreß-Teil mit einem Befehlsteil. Mit dem Befehlsteil wird unterschieden zwischen Vorbereitung zu einem Programmsprung, Test zum Durchführen des Sprunges und Ausgabe von Steuersignalen. Die Daten- und Adreß-Anteile bestimmen, welche Eingangsleitung für einen Sprung getestet werden soll, welche Ausgangsleitung mit einem Signal versehen werden soll und welche Sprungadresse der Adreßzähler für den Speicher annehmen soll. Dadurch, daß beide Informationsteile in einem Wort des Speichers zusammengefaßt sind, ist der Adreßbereich nennenswert eingeschränkt, was insofern nachteilig ist, als dann der Sprungbereich stark beschränkt wird, der in der Regel selbst bei voller Ausnutzung aller Bits eines Speicherwortes nicht ausgeschöpft werden kann. Da die üblicherweise verwendeten Speicherbausteine eine Speicherbreite von acht Bits bei einer Speichertiefe von zehn Bits aufweisen, schränkt jedes Speicherbit, das zusätzlich für Befehlszwecke verbraucht wird, die Sprungweite im Verhältnis zur möglichen Sprungweite erheblich ein. Die Durchführung eines Programmsprunges erfolgt somit in der Art, daß zunächst eine Sprungadresse in ein Zwischenregister mit einem gesonderten Befehl gesetzt wird.

In einem nächsten Befehl wird der zu testende Eingang adressiert und daraufhin geprüft ob eine Sprungbedingung vorliegt. Ist das der Fall, so wird aus dem Zwischenregister die Sprungadresse in den Adreßpuffer geladen. Andernfalls wird der Adreßpuffer, der auch als Zähler arbeitet, inkrementiert. Erst danach kann mit einem weiteren Schritt ein neues Ausgangssignal abgegeben werden. Eine solche Sprungdurchführung ist, abgesehen von einem gewissen Zeitaufwand, dadurch nachteilig, daß ein zusätzliches Zwischenregister erforderlich wird, weil die Sprungadresse nicht unmittelbar vom Programmspeicher in den Adreßpuffer geladen werden kann. Weiterhin wird die Speichertiefe durch Verbrauch für Befehlszwecke soweit eingeschränkt, daß Mehrfachsprünge für bequeme Anordnung von Programmteilen im Speicher zunehmend erforderlich werden, wodurch aber ein Programmtest nachteilig beeinflußt wird.

Aus dem Handbuch zur Programmierung und Benutzung des Computersystems IBM 1130 (1970) ist ein Rechnersystem bekannt, das einen Kernspeicher, einen Plattenspeicher, Ein- und Ausgabeeinheiten sowie eine zentrale Recheneinheit umfaßt. Die zentrale Recheneinheit liefert Steuerbefehle an die Ein- und Ausgabeeinheiten und an den Plattenspeicher, und steht weiterhin befehls- und datenmäßig mit dem Kernspeicher in Verbindung. Ein Instruktionsadreßgeber (IAR) in der Zentraleinheit enthält die Adressen von durchführbaren Instruktionen, die im Kernspeicher abgespeichert und einzeln nach Maßgabe der jeweils erreichten Adresse an die Zentraleinheit übergeben werden, unter Erhöhung der erreichten Adresse um den Wert 1 während Ausführung dieser Instruktionen. Normalerweise erfolgt so der Aufruf der Instruktionen nacheinander entsprechend der schrittweisen Adressenfolge. Diese Folge wird jedoch, bei Vorliegen einer Sprunganweisung, geändert, nämlich wenn einmal nicht die regulär nächstfolgende Instruktion ausgeführt werden soll. Ob das der Fall sein soll, ergibt sich aus dem Aufbau der Instruktion, der veranlaßt, daß dann nicht die nächste, sondern die übernächste Instruktion ausgeführt wird (a. a. O. Seite 214). Speziell aufgebaute Doppelwortinstruktionen enthalten im zweiten Wort die Sprungadresse, wobei es sich um eine direkte Adressenangabe oder um einen indirekten Adressenhinweis handeln kann (a. a. O. Seite 215). Ein entsprechender Hinweis auf die Art der Adresse befindet sich in einem bestimmten Bitbereich des ersten Wortes der Doppelwortinstruktion. Handelt es sich im zweiten Wort der Doppelwortinstruktion um eine indirekte Adresse, so ist nach Hinweis und Maßgabe des ersten Wortes beispielsweise zu dem zweiten Wort eine Teiladresse zu addieren. Dies entspricht hinsichtlich der Speicherorganisation wieder dem schon erörterten paging. In jedem Fall ist aber die Sprungbedingung Teil der dem Kernspeichersystem bedingt fest vorgegebenen Instruktionen; eine speichergesteuerte Abfrage von externen Sprungbefehlsgebern zur ereignisabhängigen Steuerung externer, über den Progammspeicher anwählbarer Funktionseinheiten ist daraus nicht zu entnehmen. Für eine industrielle Folgesteuerung ist eine übersichtliche Speicherbelegung im Interesse einfacher Programmänderungen bzw. Störungssuche anzustreben; eine derart aufwendige Bildung der Datensätze wie beim IBM-Großrechner, zumal mit Einbeziehung von Sprungkriterien direkt in die Instruktionen und Wechsel zwischen direkter Speicherfortschaltung und paging-Adreßmodifikation, ist für das Betriebssystem eines Rechners angebracht, kann für industrielle Folgesteuerungen jedoch nicht in Betracht kommen.

Der Erfindung liegt demgegenüber die Aufgabe zugrunde, ein Verfahren und eine Schaltanordnung der gattungsgemäßen Art dahingehend auszubilden, daß speicherprogrammierte Folgesteuerungen mit Adressen-Sprungbefehlen ohne besonderen Programmieraufwand und ohne aufwendige Daten-Zwischenspeicherungen realisiert werden können.

Diese Aufgabe wird erfindungsgemäß bei einem Verfahren der gattungsgemäßen Art durch die im kennzeichnenden Teil des Anspruches 1 angegebenen Verfahrensschritte und bei einer Schaltanordnung der gattungsgemäßen Art durch die im kennzeichnenden Teil des Anspruches 7 angegebenen Merkmale gelöst.

Die erfindungsgemäße Lösung erlaubt in einfacher Weise die Realisierung auch anspruchsvoller Schaltungsfunktionen wie Sprungbefehlsketten bei speicherprogrammierten Folgesteuerungen. Die Speicherorganisation und damit die Programmierung bleibt überaus übersichtlich und deshalb leicht überprüfbar bzw. modifizierbar. Durch bloße Abspeicherung von Sprungadressen-Nummern können Warteschleifen, Vor- und Rücksprünge beliebig vorgegeben werden. Durch Ansteuerung mehrerer nachgeschalteter Funktionseinheiten können seriell- oder parallel-binärkodierte Informationen ausgegeben, beispielsweise Zeitgeber eingestellt werden. Wo nämlich im Ablaufprogramm eine Entscheidungsverzweigung vorgesehen ist, erfolgt bei Erreichen des zugeordneten Speicherplatzes keine Datenausgabe, sondern eine Abfrage eines Sprungbefehlsgebers, der durch die unter dieser Adresse abgespeicherten Daten individualisiert ist. Falls der Sprungbefehlsgeber ein Eingangssignal liefert, das zur Durchführung des Adressensprunges auffordert, wird die Sprungadresse aus dem nächstfolgenden Speicherplatz abgefragt, der entsprechende Zahlenwert in den Adressenzähler übernommen (also die Zählstellung auf diesen Zahlenwert gesetzt) und mit dieser Sprungadresse die sukzessive Abfrage des Speicherinhalts fortgeführt. Die Sprungadressen können also beliebige Zahlen innerhalb des Zahlenumfanges sein, über den die Adressen sich erstrecken, ohne diesen Zahlenumfang verlassen zu müssen und ohne für den Zahlenaufbau bestimmte Gesetzmäßigkeiten einhalten zu müssen, etwa bestimmte Speicherplätze für Sprungadressen reservieren zu müssen, wie es beim paging erforderlich ist.

Der Programmieraufwand bei Anwendung dieser erfindungsgemäßen Lösung reduziert sich somit auf eine fortlaufende Nummernliste über den Inhalt des Speichers an den einzelnen Speicherplätzen, wobei dieser Speicherinhalt die Nummer einer Sprungadresse ist, wenn der davorliegende Speicherplatz nicht einer Datenausgabe zugeordnet ist, sondern der Abfrage auf Vorliegen oder Nicht-Vorliegen eines Sprungbefehls. Die Ausführungszeit für die Durchführung eines Adressensprunges oder gar einer Folge von Adressensprüngen ist im Verhältnis zur Länge der einzelnen aufeinanderfolgenden Taktperioden sehr kurz, obwohl die Tatsache, daß eine Verzweigung erreicht ist, und die Information, welcher Weg eingeschlagen werden soll (Sprungadresse), in zwei aufeinanderfolgenden Speicherplätzen abgespeichert sind.

Wegen des einfachen Funktionsablaufes und des geringen Programmieraufwandes können billige, langsame Lesespeicher eingesetzt werden. Schaltungstechnisch ist zur Realisierung der erfindungsgemäßen Lösung (außer dem ohnehin bei einer speicherprogrammierten Steuerung vorzusehenden Programm-Lesespeicher mit Multiplexer zur Abfrage verschiedener Sprungbefehlgeber und Demultiplexer zur Ansteuerung von Funktionseinheiten) im wesentlichen lediglich eine Taktgeberschaltung erforderlich, die pro Taktperiode, zum Fortschalten von einem Speicherplatz auf den nächsten, nacheinander voneinander unterscheidbare, z. B. an unterschiedlichen Ausgängen anstehende, Signale erzeugt. Die Verwendung eines speziellen Übergabesignales zwischen zwei Fortschaltsignalen zum jeweiligen Weiterschalten auf die nächstfolgende Adresse ermöglicht es, in schaltungstechnisch besonders einfacher und funktionssicherer Weise, ohne Daten- oder Adressen-Zwischenspeicherung den Adressensprung in zwei aufeinanderfolgenden Taktperioden durchzuführen.

Gegebenenfalls kann nach Anspruch 2 bzw. 8 mit Zwischenschaltung eines zusätzlichen Verriegelungssignals zwischen dem Fortschaltsignal nach dem Übergabesignal der Ausgangsgeber bei momentaner Abfragung des Sprungbefehlsgebers blockiert werden.

Die Weiterbildung entsprechend den Ansprüchen 3 bzw. 10, nämlich die Verwendung von zwei aufeinanderfolgenden Verriegelungssignalen zwischen dem Fortschaltsignal zu Beginn und dem Übergabesignal am Ende einer Taktperiode, weist den besonderen Vorteil auf, aufeinanderfolgende Sprungbefehle unmittelbar nacheinander, ohne Zwischenschalten von Datentakten und ebenfalls ohne Zwischenspeicherung, abarbeiten zu können. Irgendwelche Programmbesonderheiten sind hierfür nicht erforderlich.

Die spezielle Realisierung nach Anspruch 9 weist den besonderen Vorteil auf, für die Ausführung einstufiger oder mehrstufiger Adressen-Sprungbefehle keinerlei gesondert zu programmierende logische Einheiten als zentrale Steuerungseinheiten zu benötigen. Vielmehr sind lediglich zwei, von dem jeweils wirksamen Verriegelungssignal getaktete, zweistufige Schieberegister erforderlich, von denen das eine bei Erreichen eines Speicherplatzes, der einer Verzweigungsmöglichkeit zugeordnet ist, die Sperre jeglicher Datenausgabe bewirkt, während das andere nach Fortschalten auf den nächstfolgenden Speicherplatz (unter dem die Sprungadresse selbst abgespeichert ist) die Übernahme dieses Zahlenwertes als die neue Zählstellung des Adressenzählers triggert, wenn ein Sprung durchgeführt werden soll.

Bei einer Weiterbildung entsprechend den Ansprüchen 4 bzw. 11 wird aus einem Fortschaltsignal bei Vorliegen eines Sprungbefehles sowohl ein Blockiersignal als auch ein Setzsignal abgeleitet. Diese Lösung erbringt den Vorteil, in der Verriegelungsschaltung auf Schieberegister verzichten zu können, wodurch auch das Erfordernis entfällt, in der Adressen-Fortschalteinrichtung zwischen jeweils einem Fortschaltsignal und einem Übergabesignal zusätzlich wenigstens ein Verriegelungssignal zur Schieberegister-Ansteuerung erzeugen zu müssen. Ausgehend von der Erkenntnis, daß bei Abfrage eines Sprungsbefehlsgebers die Blockierung der Sprungbefehlsgeber-Abfrageschaltung nicht notwendig ist, wird dabei das Anstehen eines Sprungbefehlssignales unmittelbar zur Vorbereitung einer UND-Schaltung herangezogen, die durchgeschaltet wird, wenn bei Auftreten der Vorderflanke des nächstfolgenden Fortschaltsignales dieser Sprungbefehl noch ansteht. Falls der Adressenzähler nicht selbst schon dafür ausgelegt ist, zunächst noch einen Zählschritt auszuführen, ehe die an seinem Übernahmeeingang bereitgestellte Information übernommen wird, ist es lediglich erforderlich, im Zuge der Ansteuerung seines Übergabe-Setzeinganges eine kurze Zeitverzögerung vorzusehen, um sicherzustellen, daß die Übernahme erst nach Fortschaltung in die nächste Adresse erfolgt, in der als Datensatz die Sprungadresse vorliegt, die vom Adressenzähler als neue, momentane Zählstellung übernommen werden soll.

Grundsätzlich kann zur Auslösung solchen verzögerten Durchschaltens des vorbereiteten Setzsignals das Ende des jeweiligen Fortschaltsignales herangezogen werden. Allerdings muß dann Vorsorge getroffen werden, daß nicht bereits der gerade erreichte Datensatz (zur Anwahl eines Sprungbefehlsgebers) auch schon als Sprungadresse, also als neue Adressenzähler-Zählstellung, übernommen wird; denn eine Mehrfachausnutzung eines Datensatzes dahingehend, daß er einerseits der Abfrage eines bestimmten Sprungbefehlsgebers und außerdem der Definition der Sprungadresse (bei Vorliegen einer Aufforderung zur Durchführung eines Adressensprunges) dient, würde zu einer unübersichtlichen Speicherorganisation und schlechten Speicherausnutzung führen und die Vorteile der erfindungsgemäßen Lösung weitgehend durch entsprechend unübersichtlicheren Programmaufbau zunichte machen. Deshalb ist es im Rahmen der Erfindung zu bevorzugen, in Abhängigkeit vom Beginn eines Fortschaltsignales das vorbereitete Setzsignal durchzuschalten. Hierdurch ist sichergestellt, daß bei erstmaliger Anwahl eines Sprungbefehlsgebers (weil bei Beginn des die Anwahl einleitenden Fortschaltsignales eine Information von diesem Sprungbefehlsgeber noch gar nicht vorliegen kann) noch keine Durchschaltung des Setzsignales eingeleitet, sondern hierfür das Erscheinen des nächstfolgenden Fortschaltsignales abgewartet wird. Mit diesem wird auf den nächstfolgenden Speicherplatz weitergeschaltet, unter dem dann die Sprungadresse selbst abgespeichert ist. Ohne irgendwelchen Zusatzaufwand können nun auch beliebig viele Adressensprünge unmittelbar, ohne Erfordernis von Zwischenschritten bei der Speicheransteuerung oder von Zwischenspeicherungen, hintereinandergeschaltet werden.

Im Programm-Speicher können unter den einzelnen Adressen enthaltene Datensätze, die keiner Anwahl eines Sprungbefehlsgebers zugeordnet sind, entweder Sprungadressen sein oder aber der Ansteuerung von Funktionseinheiten über Ausgangsgeber zugeordnet sein. Die weiterbildenden Maßnahmen nach Anspruch 5 bzw. 12 vermeiden Fehlfunktionen seitens der vom Speicher anzusteuernden Funktionseinheiten, indem der Ausgangsgeber zur Ansteuerung von Funktionseinheiten blockiert wird, wenn (aufgrund Anwahl eines Sprungbefehlsgebers vom Speicher aus) feststeht, daß der unter der nächsten Speicheradressen enthaltene Datensatz im Speicher eine Sprungadresse ist, also nicht zur Ansteuerung einer Funktionseinheit geeignet ist. Die Ableitung eines solchen Blockiersignales aus der Tatsache, daß ein Sprungbefehlsgeber angewählt ist, ist dabei schaltungstechnisch und anwendungstechnisch wesentlich weniger aufwendig, als eine Berücksichtigung einer entsprechenden Information innerhalb der im Speicher abgespeicherten Datensätze.

Die schaltungstechnisch denkbar einfache Realisierung eines Folgesteuerungs-Sprungbefehls nach der Erfindung ermöglicht es in schaltungstechnisch wie programmiertechnisch besonders vorteilhafter Weise, beliebig lange Wartezeiten bzw. Fortschalt-Unterbrechungen im Zuge des Ablaufes des Fortschaltprogrammes zu berücksichtigen. Besonders zweckmäßig ist es, hierfür die Maßnahmen gemäß Anspruch 6 bzw. 13 vorzusehen. Danach werden von bestimmten der vom Speicher ansteuerbaren Funktionseinheiten diesen nachgeschaltete oder in diese integrierte Verzögerungsstufen angesteuert, die ausgangsseitig auf bestimmte vom Speicher anwählbare Sprungbefehlsgeber geschaltet sind bzw. unmittelbar als solche Geber eingesetzt sind. Je nachdem, ob im Zusammenhang mit der Ansteuerung solcher Verzögerungsstufen für die entsprechende Zeitspanne die Erzeugung weiterer Fortschaltsignale unterbrochen wird, oder nicht, wird entweder im Zuge der sukzessiven Abarbeitung des Folgesteuerungsprogrammes während der vorgegebenen Zeitspanne ein Sprungbefehl noch ignoriert und erst nach Ablauf dieser Zeitspanne, wenn dieser Sprungbefehlsgeber wieder abgefragt wird, durchgeführt; oder es wird der gesamte weitere Ablauf der Folgesteuerung bei Abfrage des betreffenden Sprungbefehlsgebers unterbrochen, bis die vorgegebene Zeitspanne abgelaufen und mit Ausführung eines Adressensprunges (der durchaus auch in die regulär nächstfolgende Adresse erfolgen kann) wieder aufgenommen.

Weitere Merkmale der Erfindung ergeben sich aus den Ansprüchen. Nachstehend sind anhand der Beschreibung und Zeichnung Ausführungsbeispiele der Erfindung näher erläutert. Es zeigt

Fig. 1 eine Schaltanordnung mit Erzeugung von zwei aufeinanderfolgenden Verriegelungssignalen zwischen einem Fortschaltsignal und einem Übergabesignal,

Fig. 2 ein Impulsdiagramm zur Erläuterung der Wirkungsweise der Schaltanordnung nach Fig. 1 und

Fig. 3 eine gegenüber Fig. 1 abgewandelte Schaltanordnung, die keiner Erzeugung von Verriegelungssignalen bedarf.

Ein Programm-Speicher 1 enthält eine Vielzahl von individuell nacheinander ansteuerbaren Speicherplätzen, die durch Adressen A individualisiert sind und auf die dementsprechend selektiv abfragbare Informationen als binärkodierte Daten D verteilt sind. Im dargestellten, bevorzugten Realisierungsbeispiel sind die Adressen A durch Zahlen einer Zählfolge gegeben. Mittels einer Adressen-Fortschalteinrichtung 2' erfolgt das Ansprechen der einzelnen Speicherplätze im Speicher 1, also das Auslesen der darin enthaltenen Daten D. Welcher Speicherplatz gerade angesprochen (ausgelesen) wird, ist durch den momentanen Zählerstand eines Adressenzählers 2 innerhalb der Fortschalteinrichtung 2' bestimmt. Die einzelnen über ihre Adressen individualisierten Speicherplätze des Speichers 1 sind bestimmten Funktionsstellungen von Geber-Abfrageschaltungen 3 bzw. Ausgangsgebern 4 zugeordnet, bei denen es sich um Multiplexer (Eingangsports) bzw. um Demultiplexer (Ausgangsports) handelt. Für den Fall, daß ein Speicherplatz des Speichers 1 einer bestimmten Funktionsstellung eines Ausgangsgebers 4 zugeordnet ist, beinhaltet die Information dieses Speicherplatzes, also der Inhalt der Daten D, zugleich die Aussage, daß in dieser Funktionsstellung am Ausgang eine Binärinformation HIGH (H) oder LOW (L) erscheint. Dementsprechend wird eine elektrisch ansteuerbare Funktionseinheit 5, die dieser Funktionsstellung des Ausgangsgebers 4 zugeordnet ist, beispielsweise ein Fadenabscheider bei einer Industrie-Nähmaschine, in Funktion gesetzt oder außer Funktion gesetzt. Werden in bestimmten Funktionsstellungen des Ausgangsgebers 4 nacheinander oder gleichzeitig erscheinende H- und L-Signale im Zusammenhang ausgewertet, dann stellen sie eine umfangreichere binärkodierte Information dar, beispielsweise die Information über die Anzahl ausführender Stiche, ehe eine Nahtverriegelung mit abschließender Ansteuerung des Fadenabschneiders erfolgen soll.

Der Ablauf der Funktionen in denjenigen Geräten, die den Ausgangsgebern 4 nachgeschaltet sind, ergibt sich daraus, welche Daten D unter den nacheinander auftretenden Adressen A im Speicher 1 vorgegeben sind. Unter bestimmten Konditionen wird jedoch nicht der Funktions-Teilschritt gewünscht, der unter der nächstfolgenden Adresse A im Speicher 1 vorgegeben ist, sondern ein Sprung auf einen ganz anderen Befehl, also auf eine ganz andere Adresse verlangt, oder beispielsweise ein Rücksprung zur Wiederholung eines Funktions-Teilablaufes. Wenn eine solche Abweichung von der abgespeicherten Adressenfolge und ein definierer Sprung auf einen anderen Speicherplatz aufgrund der Bedingungen des Betriebsablaufes der zu steuernden Maschine erforderlich ist, wird in der momentan erreichten Funktionsstellung an die Abfrageschaltung 3 von einem Sprungbefehlsgeber 6 ein Sprungbefehlssignal geliefert.

Zur Durchführung eines solchen Sprungs auf eine andere als die nächstfolgende Adresse im Speicher 1 ist eine Verriegelungsschaltung 7 vorgesehen, die einerseits von der Adressen-Fortschalteinrichtung 2' und andererseits von der Geber-Abfrageschaltung 3 angesteuert wird und ihrerseits den Adressenzähler 2 sowie den Ausgangsgeber 4 ansteuert.

Beim Programm-Speicher 1 handelt es sich um einen beliebigen Lesespeicher, bevorzugt um einen ROM-Speicher oder (für Kleinserien oder für Veränderungen unterworfene Folgesteuerungen) um einen PROM-Speicher in integrierter Technik. Beim seinem Adresseneingang 1.2 vorgeschalteten Adressenzähler 2 handelt es sich um eine digitale Zählschaltung an sich beliebiger Kodierung (beispielsweise um einen Binärzähler oder um einen BCD-Zähler). Es ist nur sicherzustellen, daß der Adressenzähler 2 Zählergebnisse liefert, mittels derer bestimmte durch Zählstellungen individualisierte Adressen A im Speicher 1 ansprechbar sind, die unter diesen Adressen A abgespeicherten Daten D also an den Ausgangsgeber 4 bzw. gegebenenfalls an die Geber-Abfrageschaltung 3 übergebbar sind. Der Adressenzähler 2 wird über seinen Zählsignaleingang 2.8 von einem Fortschaltausgang 8.2 einer Taktschaltung 8 in der Fortschalteinrichtung 2' periodisch angesteuert, um schrittweise weiterzuzählen, also von der Ansteuerung eines Speicherplatzes im Speicher 1 auf den Speicherplatz mit der nächstfolgenden Adresse A weiterzuschalten. Für den Fall, daß jedoch nicht der Speicherplatz mit der nächstfolgenden Adresse A, sondern ein Speicherplatz mit einer ganz anderen Adresse A entsprechend einer ganz anderen (größeren oder kleineren) Zählstellung des Adressenzählers 2 als nächster angesteuert (abgefragt) werden soll, ist diese individuelle Zählstellung in entsprechend kodierter Form am Übernahmeeingang 2.2 des Adressenzählers 2 zur Verfügung zu stellen, um sie bei Auftreten eines Preset- oder Übernahmesignales am Übergabeeingang 2.7 als aktuelle Zählstellung des Adressenzählers 2 zu übernehmen, wie es als solches aus der digitalen Zähltechnik bekannt ist. Bis zum Erscheinen eines abermaligen Übernahmesignales am Übergabeeingang 2.7 erfolgt dann von dieser Zählstellung aus schrittweise das Weiterzählen nach Maßgabe der Ansteuerung des Zählsignaleinganges 2.8.

Die Taktschaltung 8 in der Fortschalteinrichtung 2' liefert, zwischen je zwei aufeinanderfolgenden Fortschaltsignalen T1 an ihrem Fortschaltausgang 8.2, um den Adressenzähler 2 um jeweils einen Zählschritt weiterzuschalten, ein Übergabesignal T4 an einen Freigabeausgang 8.4, um einen Auslesesteuereingang 4.8 am Ausgangsgeber 4 freizugeben, und zwischen beiden (wenigstens) ein Verriegelungssignal T2 an einem Verriegelungsausgang 8.7, um den Ausgangsgeber 4 bei momentaner Abfragung eines Sprungbefehlsgebers 6 zu blockieren. Dazu ist die Taktschaltung 8 beispielsweise als rückgekoppeltes Schieberegister (Ringzähler) aufgebaut, das über seinen Takteingang 8.9 von einem Impulsgenerator 9 angesteuert wird.

Die Verriegelungsschaltung 7, mittels derer nach Maßgabe der Informationen vom Sprungbefehlsgeber 6 unter Abkehr vom Weiterschalten auf die nächstfolgende Adresse A die Durchführung eines Sprunges auf eine Sprungadresse Ax vorgenommen oder unterdrückt wird, besteht im wesentlichen aus zwei Schieberegistern 11 und 12. Deren Takteingänge 11.8 bzw. 12.8 für den Schiebetakt sind über einen Verriegelungseingang 7.8 der Verriegelungsschaltung 7 an den Verriegelungsausgang 8.7 der Taktschaltung 8 in der Fortschalteinrichtung 2' angeschlossen; d. h., das jeweils nach einem Fortschaltsignal T1 zum Weiterschalten des Adressenzählers 2 erscheinende Verriegelungssignal T2 zum Ansteuern der Verriegelungsschaltung 7 wirkt für die Schieberegister 11 und 12 als Schiebetaktsignal. Der Informationseingang 11.3 ist über einen Gebereingang 7.3 der Verriegelungsschaltung 7 an die Geber-Abfrageschaltung 3 angeschlossen, aus der sie ein Quittungssignal erhält, wenn die Information eines beliebigen, vom Speicher 1 angesteuerten Sprungbefehlsgebers 6 abgefragt wird. Diese Sprungbefehlsinformation selbst wird über die Geber-Abfrageschaltung 3 auf einen Sprungbefehlseingang 7.6 der Verriegelungsschaltung 7 gegeben, an die der Informationseingang 12.3 des zweiten Schieberegisters 12 angeschlossen ist. Die Löscheingänge 11.13 bzw. 12.13 der Schieberegister 11 und 12 sind einer Verzögerungsstufe 13 nachgeschaltet. Im dargestellten bevorzugten Realisierungsbeispiel sind beide Schieberegister 11 und 12 zweistufig aufgebaut. Der zweite Ausgang 12.2 des zweiten Schieberegisters 12 steuert einerseits die Verzögerungsstufe 13 und andererseits, über einen Setzausgang 7.2 der Verriegelungsschaltung 7, den Übergabeeingang 2.7 des Adressenzählers 2 an. Der erste Ausgang 12.1 des zweiten Schieberegisters 12 ist nicht abgefragt. Beide Ausgänge 11.1 und 11.2 des ersten Schieberegisters 11 sind über eine ODER-Schaltung 14 zusammengefaßt und auf einen Blockierausgang 7.4 der Verriegelungsschaltung 7 geführt.

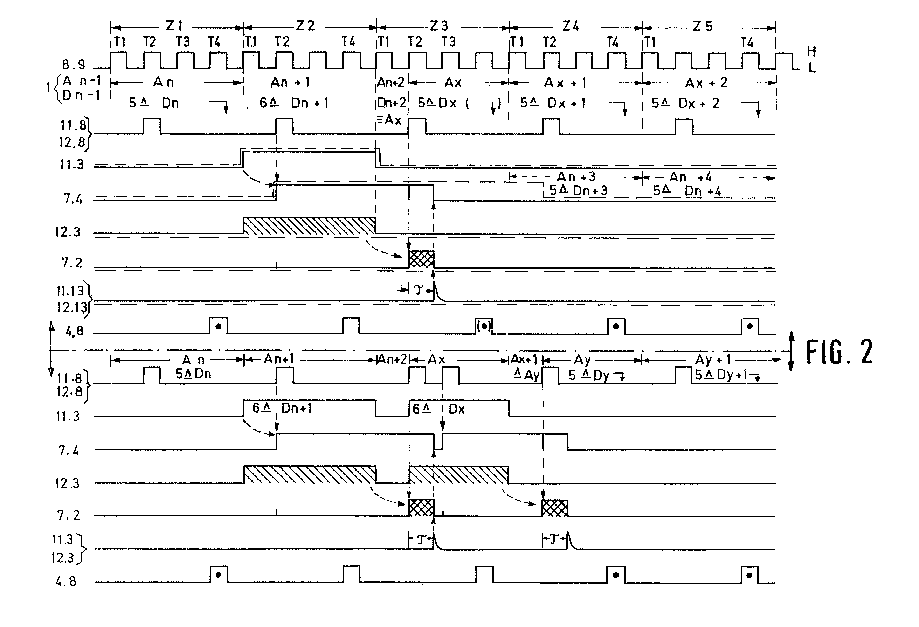

Ein ODER-Glied 15 vor dem Takteingang 11.8 des ersten Schieberegisters 11 ist für den Fall vorgesehen, daß zwischen einem Fortschaltsignal T1 und dem darauf folgenden Übergabesignal T4 außer dem schon erwähnten Verriegelungssignal T2 (wenigstens) ein weiteres Verriegelungssignal T3 an einem weiteren Verriegelungsausgang 8.16 der Taktschaltung 8 vorgesehen ist, dessen funktionelle Bedeutung unten im Zusammenhang mit Fig. 2 erläutert ist. In diesem Falle weist die Verriegelungsschaltung 7 für dieses weitere Verriegelungssignal T3 einen weiteren Verriegelungseingang 7.16 auf, der über eine Blockierstufe 16 auf den zweiten Eingang des ODER-Gliedes 15 geführt ist. Die Blockierstufe 16 ist beispielsweise als UND-Bedingung 17 mit einem negierenden Eingang realisiert, der an den Blockierausgang 7.4 der Verriegelungsschaltung 7 angeschlossen ist, die Funktion der Blockierstufe 16 also immer dann freigibt, wenn der Blockierausgang 7.4 von keinem der beiden Ausgänge 11.1 oder 11.2 des ersten Schieberegisters 11 angesteuert wird.

Immer dann, wenn mittels des Adressenzählers 2 ein Speicherplatz im Speicher 1 abgefragt wird, dessen Daten D die Ansteuerung der Geber-Abfrageschaltung 3 zur Abfrage eines bestimmten Sprungbefehlsgebers 6 bewirken, folgt vom ersten Schieberegisters 11 her eine Ansteuerung des Blockierausganges 7.4, damit während der Durchführung bzw. der Ignorierung eines Adressensprunges (je nach der Momentaninformation am abgefragten Sprungbefehlsgeber 6) in der Abfrageschaltung 3 ein Übergang auf andere Funktionsstellungen und im Ausgangsgeber 4 jegliche Informationsausgabe unterbunden wird. Hierfür sind dem Blockierausgang 7.4 der Verriegelungsschaltung 7 ein Blockiereingang 4.7 des Ausgangsgebers 4 sowie ein Blockiereingang 3.7 der Abfrageschaltung 3 nachgeschaltet. Sofern der Blockiereingang 4.7 am Ausgangsgeber 4 nicht angesteuert, eine Informationsausgabe also nicht unterbunden ist, erfolgt eine Informationsausgabe nach Maßgabe des Informationsinhalts des gerade erreichten Speicherplatzes im Speicher 1, wenn vor Weiterschalten auf den nächsten Speicherplatz (aufgrund Erscheinens des nächsten Fortschaltsignales T1 am Zählsignaleingang 2.8) das Übergabesignal T4 vom Freigabeausgang 8.4 der Taktschaltung 8 einen Freigabeausgang 8.4 der Taktschaltung 8 einen Auslesesteuereingang 4.8 am Ausgangsgeber 4 freigibt.

Diese funktionellen Zusammenhänge ergeben sich auch aus dem Impuls-Zeit-Diagramm gemäß Fig. 2, von dem zunächst nur die obere Hälfte beachtet werde. Zur Vereinfachung der Übersicht sind die Ausgangssignale der Taktschaltung 8 ebenso wie die Sprungbefehlssignale, die vom Sprungbefehlsgeber 6 geliefert werden, als Rechteckimpulse dargestellt. Andere Impulsformen oder pulskodierte Signale sind aber ebenso zur Realisierung des erfindungsgemäßen Verfahrens anwendbar.

Am Takteingang 8.9 der Taktschaltung 8 erscheint eine Impulsfolge vom Impulsgenerator 9, die als eine Folge von Taktperioden Z darstellbar ist. Jede Taktperiode Z beginnt mit einem Fortschaltsignal T1 und endet mit einem Übergabesignal T4, zwischen denen (wenigstens) ein Verriegelungssignal T2 erscheint. Beim dargestellten, bevorzugten Realisierungsfall ist ein weiteres Verriegelungssignal T3 innerhalb einer jeden Taktperiode Z vorgesehen, auf dessen Bedeutung im Zusammenhang mit der unteren Hälfte der Darstellung in Fig. 2 eingegangen wird.

Das Auftreten eines Fortschaltsignales T1 bewirkt ein Fortschalten von einer Adresse An−1 auf die nächstfolgende Adresse An im Speicher 1; d. h. am Datenausgang 1.1 werden die abgespeicherten Daten Dn−1 durch die abgespeicherten Daten Dn ersetzt. Das Übergabesignal T4 der momentan betrachteten Taktperiode Z1 bewirkt die Ansteuerung des Auslesesteuereinganges 4.8 des Ausgangsgebers 4, der diejenige der nachgeschalteten Funktionseinheiten 5 ansteuert, die gemäß der im Speicher 1 abgespeicherten Information entsprechend den Daten Dn individualisiert ist.

Zu Beginn der in Fig. 2 nächstfolgend dargestellten Taktperiode Z2, also mit Erscheinen des nächsten Fortschaltsignales T1, wird auf den Speicherplatz mit der nächstfolgenden Adresse An+1 weitergeschaltet, in dem die Daten Dn+1 enthalten sind. Diese Daten Dn+1 seien keiner dem Ausgangsgeber 4 nachgeschalteten Funktionseinheit 5 zugeordnet, sondern der Ansprache eines bestimmten von mehreren Sprungbefehlsgebern 6 über die Abfrageschaltung 3. Die Tatsache, daß nun über den Datenausgang 1.1 ein Sprungbefehlsgeber 6 zur Abfrage der Sprungbefehlsinformation angesteuert ist, führt am Gebereingang 7.3 zu einem von der Abfrageschaltung 3 gelieferten HIGH-Signal als Abfrage-Quittungssignal.

Das auf das Fortschaltsignal T1 der momentan betrachteten Taktperiode Z1 folgende Verriegelungssignal T2 dient am Takteingang 11.8 des ersten Schieberegisters 11 als Schiebetaktsignal, d. h., das Quittungs-HIGH-Signal am Informationseingang 11.3 wird auf den ersten Ausgang 11.1 und somit als Blockiersignal auf den Blockierausgang 7.4 der Verriegelungsschaltung 7 durchgeschaltet. Über den Blockiereingang 3.7 ist dadurch gewährleistet, daß bis auf weiteres keine Umschaltung der Abfrageschaltung 3 auf einen anderen Sprungbefehlsge-

ber durchgeführt wird. Über den Blockiereingang 4.7 ist dadurch zugleich gewährleistet, daß bei Erscheinen des Übergabesignales T4 am Ende der momentan betrachteten Taktperiode Z2 das Auftreten eines Impulses am Auslesesteuereingang 4.8 nicht zur Ausgabe irgendwelcher Informationen (also nicht zur Ansteuerung irgendwelcher Funktionseinheiten 5) führt, was am Ende der oberen Hälfte der Fig. 2 durch das Fortlassen eines Punktes symbolisiert ist.

Mit dem nächsten Fortschaltsignal T1, also zu Beginn der nächstfolgenden Taktperiode Z3, wird im Speicher 1 auf den nächsten Speicherplatz mit der Adresse An+2 weitergeschaltet. Unter dieser Adresse ist als Daten Dn+2 diejenige Adresse als Sprungadresse Ax abgespeichert, bei der — anstelle Fortschaltens auf den nächstfolgenden Speicherplatz An+3 — die schrittweise Auslegung des Inhalts des Speichers 1 fortgeführt werden soll, falls in der vorangegangenen Taktperiode Z2, also bei der Abfrage des den Daten Dn+1 zugeordneten Sprungbefehlsgebers 6, ein Sprungbefehl anlag. Dieser Sprungbefehl am Informationseingang 12.3 des zweiten Schieberegisters 12 ist in Fig. 2 strichschraffiert dargestellt. Das Verriegelungssignal T2, das am Takteingang 12.8 als Schiebetaktsignal auftrat, bewirkte in der Taktperiode Z2 eine Übergabe dieses HIGH-Signales an den ersten, schaltungsmäßig aber nicht abgefragten Ausgang 12.1.

In der Taktperiode Z3 wird das HIGH-Signal im ersten Schieberegister 11 vom ersten Ausgang 11.1 bei Auftreten des Verriegelungssignales T2 auf den zweiten Ausgang 11.2 weitergeschaltet. Infolge der Zusammenführung dieser Ausgänge 11.1 und 11.2 über die ODER-Schaltung 14 bleibt der Blockierausgang 7.4 weiterhin angesteuert. Dieses Verriegelungssignal T2 in der Taktperiode Z3 bewirkt ferner im zweiten Schieberegister 12 eine Fortschaltung des HIGH-Signales vom ersten Ausgang 12.1 auf den zweiten Ausgang 12.2, d. h. nun eine (kreuzschraffierte) Ansteuerung des Setzausganges 7.2 der Verriegelungsschaltung 7. Das bedeutet aber, daß der Übergabeeingang 2.7 des Adressenzählers 2 angesteuert wird und die Zählausgangsstellung, also die Ansteuerung des Adresseneinganges 1.2 am Speicher 1, auf denjenigen Zahlenwert umgeschaltet wird, der als, die Sprungadresse Ax darstellende, Daten Dn+2 seit Beginn dieser Taktperiode Z3 am Speicher-Datenausgang 1.1 erscheint und somit am Übernahmeeingang 2.2 zum Setzen des Adressenzählers 2 auf die neue Zählstellung (Sprungadresse Ax) ansteht.

Noch innerhalb dieser momentan erreichten Taktperiode Z3 wird also der Sprungbefehl ausgeführt, und vom Erscheinen des Verriegelungssignales T2 an erfolgt die Abfrage des Speicherplatzes Ax mit den Daten Dx.

Mit Erscheinen des HIGH-Signales am zweiten Ausgang 12.2 des zweiten Schieberegisters 12 erfolgt zugleich die Ansteuerung der Verzögerungsstufe 13, bei der es sich einfach um eine R-C-Schaltung, aber auch um eine analoge oder digitale Laufzeitschaltung handeln kann. Mit Ablauf der Verzögerungszeit $\tau$ erscheint am Ausgang der Verzögerungsstufe 13 und damit an den Löscheingängen 11.13 und 12.13 der Schieberegister 11, 12 ein Löschsignal, das sämtliche Schieberegister-Ausgänge 11.1 und 11.2 sowie 12.1 und 12.2 auf LOW setzt. Dadurch wird die Ansteuerung des Blockierausganges 7.4 beendet. Die Verzögerungsstufe 13 ist so zu dimensionieren, daß die Verzögerungszeit $\tau$ abgelaufen ist, an ihrem Ausgang also ein Signal erscheint, ehe im Zuge des Ablaufes der Taktperiode das nächste Signal erscheint. Bei Auftreten des die momentane Taktperiode Z3 abschließenden Übergabesignales T4 erfolgt sodann eine Ansteuerung des Auslesesteuereinganges 4.8; d. h. nach Maßgabe der aufgrund des durchgeführten Sprunges nun am Datenausgang 1.1 anstehenden Daten Dx erfolgt über den Ausgangsgeber 4 die Ansteuerung einer Funktionseinheit 5. Da in diesem, der Darstellung in der oberen Hälfte der Fig. 2 entsprechenden, Beispielsfall also die nach Durchführung des Sprunges abgefragten Daten Dx nicht ihrerseits wieder einer Abfrage eines Sprungbefehlsgebers 6 zugeordnet sind, erfolgt von der Adresse Ax aus schrittweise die weitere Abfrage der im Speicher 1 gespeicherten Daten D. Das bedeutet zu Beginn der nächsten Taktperiode Z4, also mit Erscheinen des nächsten Fortschaltsignales T1, den Übergang auf die nächstfolgende Adresse Ax+1 zum Auslesen der darunter abgespeicherten Daten Dx+1 zur entsprechenden Ansteuerung einer diesen Daten zugeordneten Funktionseinheit 5 bei Ansteuerung des Auslesesteuereinganges 4.8 durch das Übergabesignal T4 dieser Taktperiode Z4; denn das zwischen Fortschaltsignal T1 und Übergabesignal T4 in dieser Taktperiode Z4 auftretende Verriegelungssignal T2 führt nicht zu einer Ansteuerung des Blockierausganges 7.4, weil mangels Abfrage eines Sprungbefehlsgebers 6 während dieser Taktperiode Z4 an den Schieberegister-Informationseingängen 11.3 und 12.3 keine HIGH-Signale auftreten.

Mit Erscheinen des nächstfolgenden Fortschaltsignales T1 wird in die nächstfolgende Taktperiode Z5 eingetreten und zugleich auf den nächstfolgenden Speicherplatz unter der Adresse Ax+2 mit den Daten Dx+2 weitergeschaltet, die zum Schluß dieser Taktperiode Z5 bei Erscheinen des Übergabesignales T4 zur anderweitigen Ansteuerung von Funktionseinheiten 5 ausgelesen werden.

In der oberen Hälfte der Darstellung der Fig. 2 ist gestrichelt eingetragen, welche Signalzustände sich einstellen, wenn während der Taktperiode Z2, also bei Abfrage des Sprungbefehlsgebers 6, kein Sprungbefehl vorliegt, also kein Adressensprung durchgeführt und stattdessen auf den regulär nächstfolgenden Speicherplatz im Speicher 1 weitergeschaltet werden soll. Am Informationseingang 11.3 des ersten Schieberegisters ändert sich nichts, da hier wieder das Quittungssignal über die Tatsache der Abfrage eines Sprungbefehlsgebers 6 erscheint. Das führt bei Auftreten des Verriegelungssignales T2, also bei Übergabe des HIGH-Signales an den ersten Schieberegisterausgang 11.1, wieder zur Ansteuerung des Blockierausganges 7.4. Da nun jedoch vom Sprungbefehlsgeber 6 keine Information »Sprung in Sprungadresse durchführen« geliefert wird, erscheint am Informationseingang 12.3 des zweiten Schieberegisters 12 kein HIGH-Signal; dessen zweiter, abgefragter Ausgang 11.2 verbleibt also auf LOW, und eine Ansteuerung des Setzausganges 7.2 sowie der Verzögerungsstufe 13 findet nicht statt. Wie im zuvor betrachteten Fall bleibt das Auftreten des Übergabesignales T4 am Ende der Taktperiode Z2 wegen der Funktion des Blockierausganges 7.4 ohne Wirkung. Zu Beginn der nächstfolgenden Taktperiode Z3 wird zwar auf denjenigen Speicherplatz mit der Adresse An+2 weitergeschaltet, der die Sprungadresse Ax als Daten Dn+2 beinhaltet; dieser Zählerstand wird aber nicht in den Adressenzähler 2 übernommen, weil ja der Setzausgang 7.2 nun nicht angesteuert wird.

Statt dessen wird zu Beginn der nächsten Taktperiode Z4 durch das Fortschaltsignal T1 auf den nächstfolgenden Speicherplatz mit der Adresse An+3 weitergeschaltet. Das nun auftretende Verriegelungssignal T2 dient am ersten Schieberegister-Takteingang 11.8 als Schiebetaktsignal, mit dem das HIGH-Signal aus dem zweiten Ausgang 11.2 herausgeschoben wird. Da vom Informationseingang 11.3 aus der Taktperiode Z2 LOW-Signal nachgeschoben wurde, erscheint auch am Blockierausgang 7.4 nun LOW-Signal, d. h., der Blockierausgang 7.4 ist nicht mehr angesteuert. Mit Erscheinen des Übergabesignales T4, am Ende schon der momentanen Taktperiode Z4, können somit die Daten Dx+3 vom Speicher-Datenausgang 1.1 ausgelesen werden, um die zugeordnete Funktionseinheit 5 anzusteuern.

Zu Beginn der nächstfolgenden Taktperiode Z5 erfolgt der Übergang auf Abfrage des nächstfolgenden Speicherplatzes mit der Adresse An+4, um mit Erscheinen des Übergabesignales T4 dieser Taktperiode Z5 die hier abgespeicherten Daten Dn+4 zum Ansteuern bei der Funktionseinheit 5 auszulesen.

Es zeigt sich also, daß das Erscheinen der Verriegelungssignale T2 zweier aufeinanderfolgender Taktperioden Z2—Z3 beim Vorliegen eines Sprungbefehles zunächst zum Blockieren der Abfrage- und Ausgabeeinheiten und dann zum Umschalten auf die Sprungadresse Ax noch innerhalb derselben Taktperiode Z3 dienen, in der diese Sprungadresse selbst als Daten Dn+2 am Datenausgang 1.1 erschienen. Liegt dagegen bei Abfrage eines Sprungbefehlsgebers 6 kein Sprungbefehl vor, dann wird die Existenz der Sprungbefehlsadresse Ax ignoriert und auf denjenigen Speicherplatz mit der Adresse An+3 weitergeschaltet, der sich regulär an den soeben erreichten anschließt, woraufhin die Ansteuerung des Blockierausganges 7.4 wieder aufgehoben wird.

Gerade bei Folgesteuerungen kommt es vor, daß mehrere, z. B. zwei Entscheidungskriterien hintereinander vorliegen, also mit Durchführung des Sprungbefehls eine Adresse erreicht ist, unter der ihrerseits wieder Daten abgespeichert sind, die die Abfrage eines Sprungbefehlsgebers hervorrufen. Im Falle der Fig. 2 hieße das, daß nach Übergang auf die Sprungadresse Ax in der Taktperiode Z3 Daten Dx am Datenausgang 1.1 anstehen, die nicht der Ansteuerung einer Funktionseinheit 5 zugeordnet sind, sondern der erneuten Ansteuerung eines Sprungbefehlsgebers 6. Der Inhalt der Daten Dx+1 der nächstfolgenden Adresse Ax+1 wäre dann eine weitere Sprungadresse Ay, d. h., an die Taktperiode Z3 würde sich eine funktionell gleiche Taktperiode Z4 anschließen.

Gemäß derjenigen Weiterbildung der Erfindung, die zwischen einem Fortschaltsignal T1 und einem Übergabesignal T4 zwei aufeinanderfolgende Verriegelungssignale T2 und T3 vorsieht, wird die Verarbeitungszeit für die Abwicklung einer solchen Folge von zwei Sprungadressen spürbar verkürzt, wie es sich im einzelnen aus der unteren Hälfte der Darstellung der Fig. 2 für den Fall des Vorliegens eines Sprungbefehles bei Abfrage eines Sprungbefehlsgebers 6 ergibt.

Auch bei Berücksichtigung dieses weiteren Verriegelungssignales T3 ergibt sich in der ersten oben betrachteten Taktperiode Z1 keine Änderung, weil an den Informationseingängen 11.3 und 12.3 der beiden Schieberegister 11 und 12 keine HIGH-Signale anstehen, also auch dieses zusätzliche Schiebetaktsignal an den Takteingängen 11.8 und 12.8 zu keiner Änderung der Ausgangszustände führt. Das gilt entsprechend für die Taktperiode Z2, weil schon vor Auftreten des weiteren Verriegelungssignales T3 das Verriegelungssignal T2 zum Ansteuern des Blockierausganges 7.4 und damit der Blockierstufe 16 führte, die UND-Bedingung 17 zum Durchschalten des zusätzlichen Verriegelungssignales T3 auf die Schieberegister-Takteingänge 11.8 und 12.8 also nicht erfüllbar ist.

Die Daten Dx unter der während der Taktperiode Z3 angenommenen Sprungadresse Ax seien nun jedoch nicht einer definierten Ansteuerung einer Funktionseinheit 5 zugeordnet, sondern abermals der Ansteuerung der Geber-Abfrageschaltung 3 hinsichtlich eines bestimmten Sprungbefehlsgebers 6. Am Informationseingang 11.3 des ersten Schieberegisters 11 erscheint also erneut HIGH-Signal, nämlich das Quittungssignal aufgrund der Tatsache, daß ein Sprungbefehlsgeber 6 angesteuert ist. Da angenommen sei, daß dieser Sprungbefehlsgeber 6 das Kommando zum Ausführen eines weiteren Adressensprunges liefert, erscheint bei Erreichen der ersten Sprungadresse Ax bereits wieder ein HIGH-Signal am Informationseingang 12.3 des zweiten Schieberegisters 12, in Fig. 2 unten als zweiter strichschraffierter Sprungbefehl dargestellt. Weil der Blockierausgang 7.4 bei Erscheinen eines Ausgangssignales an der Verzögerungsstufe 13 nicht mehr angesteuert ist, ist die UND-Bedingung 17 am negierenden Eingang vorbereitet, die Blockierstufe 16 schaltet also bei Erscheinen des weiteren Verriegelungssignales T3 innerhalb der momentan erreichten Taktperiode Z3 durch. Über das ODER-Glied 15 werden die Takteingänge 11.8 und 12.8 erneut angesteuert, also die HIGH-Signale von den Informationseingängen 11.3 und 12.3 auf die ersten Schieberegister-Ausgänge 11.1 und 12.1 übertragen. Das führt zum erneuten Ansteuern des Blockierausganges 7.4 aufgrund dieses zusätzlichen Verriegelungssignales T3.

Mit Übergang in die nächstfolgende Taktperiode Z4 werden die Daten Dx+1 unter der Adresse Ax+1 abgefragt, die die weitere Sprungadresse Ay repräsentieren. Das Erscheinen des ersten Verriegelungssignales T2 dieser Taktperiode Z4 bewirkt das Weiterschalten des HIGH-Signales auf den zweiten Ausgang 12.2 des zweiten Schieberegisters 12, also wiederum ein Ansteuern des Setzausganges 7.2, zum Umschalten des Adressenzählers 2 auf die neue Sprungadresse Ay. Kurz darauf, ehe ein weiteres Signal in der Taktperiode Z4 erscheint, liefert die Verzögerungsstufe 13 wieder das Löschsignal zum Rücksetzen der Schieberegister-Ausgänge 11.1, 11.2 und 12.1, 12.2 in den Zustand LOW.

Damit ist auch dieser zweite Sprung durchgeführt, und noch in derselben Taktperiode Z4 erfolgt eine Ansteuerung einer Funktionseinheit 5 nach Maßgabe der Daten Dy, die unter dieser nun erreichten zweiten Sprungadresse Ay abgespeichert sind, indem das Übergabesignal T4 den Auslesesteuereingang 4.8 ansteuert.

In der nächstfolgenden Taktperiode Z5 erfolgt in der schon beschriebenen Weise ein Fortschalten auf den nächstfolgenden Speicherplatz im Speicher 1, in dem unter der Adresse Ay+1 weitere Daten Dy+1 für eine weitere Ansteuerung einer Funktionseinheit 5 vorliegen.

Dadurch, daß ein zweites Verriegelungssignal T3 zur Verfügung steht, ist es also ermöglicht, noch in derselben Taktperiode Z, in der durch Umsetzen des Adressenzählers 2 ein Sprung auf die Sprungadresse durchgeführt wird, bereits das zweite Schieberegister 12 für den nächstfolgenden Adressensprung vorbereitet wird, der dann schon in der nächstfolgenden Taktperiode Z durchgeführt wird. Je nachdem, ob in dem Speicherplatz, auf den nun gesprungen wurde, Daten abgespeichert sind, die die Ansteuerung einer Funktionseinheit oder aber die Abfrage eines weiteren Sprungbefehlsgebers bewirken, erfolgt noch in dieser Taktperiode eine Datenausgabe über den Ausgangsgeber 4 oder die Vorbereitung des zweiten Schieberegisters 12 zur Durchführung eines gegebenenfalls vom Sprungbefehlsgeber 6 geforderten weiteren Adressensprunges.

Infolge der beschriebenen Ansteuerung zweier zweistufiger Schieberegister durch zwei aufeinanderfolgende Verriegelungssignale T2, T3 zwischen einem Fortschaltsignal T1 und dem zugeordneten Übergabesignal T4 ist es also ohne besonderen Programmieraufwand möglich, innerhalb nur dreier Taktperioden Z zwei Entscheidungen (Sprungbefehle) und eine anschließende Informationsausgabe durchzuführen. Für diese Ausführung von beliebigen Sprungbefehlen ist ein denkbar geringer schaltungstechnischer Aufwand erforderlich und die Schaltanordnung entsprechend störunempfindlich. Marktstudien haben ergeben, daß unter den kommerziell erhältlichen Systemen zum Aufbau von speicherprogrammierten Steuerungen erst knapp 50% die Durchführung von Sprungbefehlen ermöglichen, was damit erklärbar scheint, daß der schaltungstechnische Zusatzaufwand selbst dann, wenn ohnehin Mikroprozessoren für den Aufbau speicherprogrammierter Steuerungen eingesetzt werden, ganz erheblich ist, um freie Ansteuerbarkeit von Programmsprüngen realisieren zu können. Auf die Nachteile, zur Durchführung von Programmsprüngen eine Modifikation der binärkodierten Adressendarstellung vorzunehmen und dafür bestimmte Speicherbereiche verfügbar halten zu müssen, wurde eingangs schon eingegangen. Nach dem erfindungsgemäßen Verfahren und mittels der erfindungsgemäßen Schaltanordnung jedoch ist es ohne großen Zusatzaufwand möglich, selbst bestehende speicherprogrammierte Steuerungen und erst recht in Konzeption befindliche speicher-programmierte Steuerungen für Durchführung von bedingten oder unbedingten Programmsprüngen auszulegen, indem einfach die vorhandene Schaltanordnung um die beschriebene Schieberegisterschaltung und die beschriebene Modifikation des Taktgenerators zur Erzeugung des Vierfach-Taktes ergänzt wird.

Eine im Zuge von elektronischen Steuerungen erforderliche logische Verknüpfung binärer Informationen ist nicht Gegenstand der vorliegenden Erfindung; eine solche Verknüpfung gemäß den Gesetzen der Boolschen Algebra erfolgt ohnehin kostengünstiger softwaremäßig, als durch hardwaremäßige Realisierung von dem konkreten Einsatzfall anzupassende Gatterschaltungen.

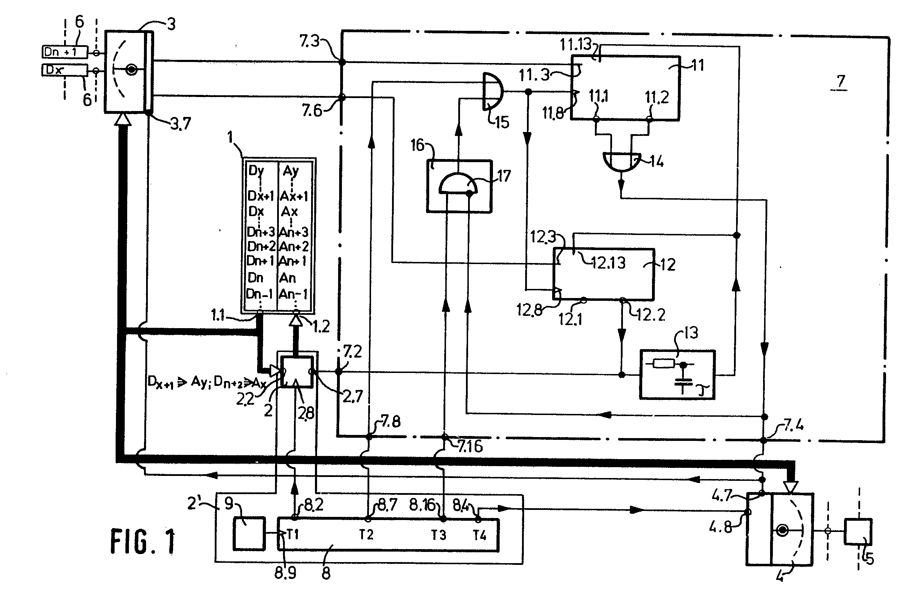

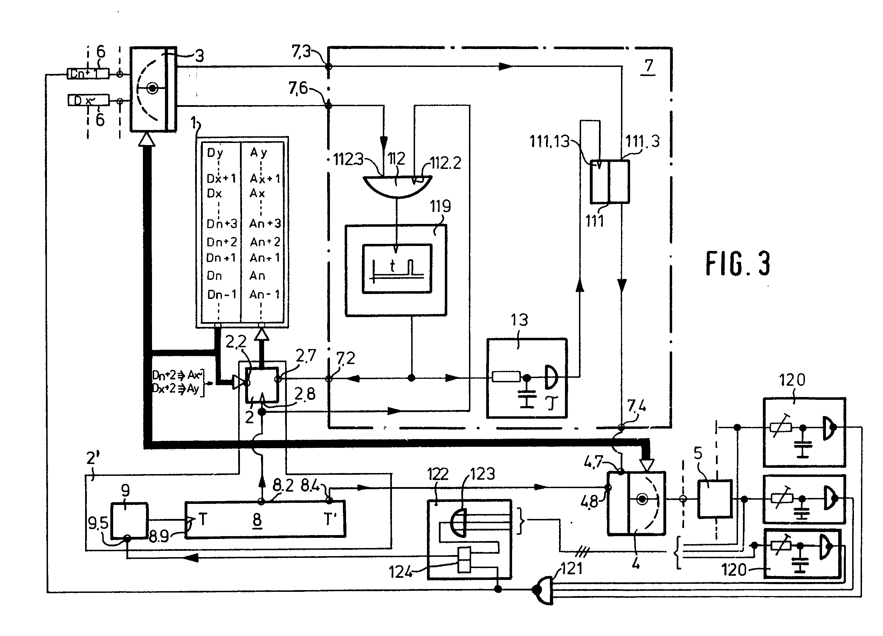

Fig. 3 der Zeichnung zeigt die Ansteuerung eines Programm-Speichers über eine Adressen-Fortschalteinrichtung, mit auf eine vorgegebene Zählstellung setzbarem Adressenzähler, und eine Verriegelungsschaltung in gegenseitiger Anordnung entsprechend Fig. 1. Aber nun besteht ein Arbeitszyklus der vom Impulsgenerator 9 angesteuerten Taktschaltung 8 lediglich noch aus Abgabe eines Fortschaltsignales T am Fortschaltausgang 8.2 und eines dagegen zeitversetzten Übergabesignales T' am Freigabeausgang 8.4. Das Auftreten eines Fortschaltsignales T am Zählsignaleingang 2.8 des Adressenzählers 2 führt zu dessen Weiterschaltung um einen Zählschritt. Das daraufhin erfolgende Auftreten eines Übergabesignales T' am Auslesesteuereingang 4.8 führt zur Ansteuerung einer Funktionseinheit 5 über einen Ausgangsgeber 4 nach Maßgabe desjenigen Datensatzes D, der im Speicher 1 der Adresse A entsprechend der gerade erreichten Zählstellung zugeordnet ist. Sofern nicht gleichzeitig der über den Auslesesteuereingang 4.8 dominierende Auslese-Blockiereingang 4.7 von der Verriegelungsschaltung 7 angesteuert ist.

Wenn der Adressenzähler 2 der Fortschalteinrichtung 2' eine Adresse An+1 im Speicher 1 ansteuert, der ein Datensatz Dn+1 für Anwahl eines Sprungbefehlsgebers 6 über eine Geber-Abfrageschaltung 3 zugeordnet ist, dann liefert die Abfrageschaltung 3 ein Abfrage-Quittiersignal an einen Quittungs-Gebereingang 7.3 der Verriegelungsschaltung 7. Hiervon wird eine Blockier-Kippstufe 111 gesetzt, so daß ein ihr nachgeschalteter Blockierausgang 7.4 ein Blockiersignal auf den Blockiereingang 4.7 des Ausgangsgebers 4 liefert. Hierdurch ist sichergestellt, daß beim Weiterschalten der Ansteuerung des Speichers 1 auf die nächstfolgende Adresse An+2, deren Datensatz Dn+2 die Bedeutung einer Sprungadresse Ax hat, also nicht der Ansteuerung einer Funktionseinheit 5 dienen soll, der Ausgangsgeber 4 gesperrt ist.

Um diesen inhaltlich eine Sprungadresse Ax darstellenden Datensatz Dn+2 als neue Zählstellung über den Übernahmeeingang 2.2 in den Adressenzähler 2 zu übernehmen, wenn zu diesem Zeitpunkt die Geber-Abfrageschaltung 3 — noch — an einen Sprungbefehleingang 7.6 der Verriegelungsschaltung 7 einen Befehl zum Ausführen eines Adressensprunges liefert, ist beim nächsten Funktionszyklus der Taktschaltung 8 am Setzausgang 7.2 der Verriegelungsschaltung 7 ein Setzsignal zu erzeugen. Hierfür ist in der Verriegelungsschaltung 7 eine UND-Schaltung 112 vorgesehen, die mit einem Informations-Vorbereitungseingang 112.3 an den Sprungbefehleingang 7.6 angeschlossen ist. Die UND-Schaltung 112 ist also vorbereitet, wenn und solange über die Adresse An+1 im Programm-Speicher 1 und die Geber-Abfrageschaltung 3 ein Sprungbefehlsgeber 6 angewählt ist, der eine Information als Aufforderung zum Durchführen eines Adressensprunges liefert.

Im nächsten Arbeits-Zyklus der Taktschaltung 8, nämlich mit Einsetzen des nächstfolgenden Fortschaltsignals T, erfolgt das Weiterschalten auf die nächstfolgende Adresse An+2 im Programm-Speicher 1. Außerdem wird die vorbereitete UND-Schaltung 112 über einen dynamischen Freigabeeingang 112.2 durchgeschaltet, um eine Verzögerungsschaltung 119 mit Schwellwertstufe anzusteuern. Nach Ablauf der Verzögerungszeit wird über den Setzausgang 7.2 der Übergabe-Setzeingang 2.7 des Adressenzählers 2 zur Übernahme der Sprungadresse Ax=Dn+2 als neuer Zählstellung angesteuert, die unter der momentan erreichten Speicher-Adresse An+2 abgespeichert ist. Gleichzeitig mit diesem Durchschalten des Setzsignals wird eine Verzögerungsstufe 13 angesteuert, die, wie in der Zeichnung dargestellt, beispielsweise aus einem R-C-Glied mit Gatter-Beschaltung zur Erzeugung eines steilflankigen Ausgangssignals besteht. Mit Ablauf der Verzögerungszeit ist, mit Übernahme der Sprungadresse als neuer Zählstellung des Adressenzählers 2, der Adressensprung bereits durchgeführt, das Abfrage-Quittiersignal am Setzeingang 111.3 der Blockier-Kippstufe 111 also verschwunden. Mit Ablauf der Verzögerungszeit führt die vorübergehende Ansteuerung des Rücksetzeinganges 111.13 der Blockier-Kippstufe 111 deshalb zur Aufhebung des Blockiersignals am Blockierausgang 7.4. Wenn danach im Zuge des aktuellen Arbeits-Zyklus der Taktschaltung 8 an deren Freigabeausgang 8.4 das Übergabesignal T' erscheint, führt die Ansteuerung des Auslesesteuereinganges 4.8 nach Maßgabe des der Sprungadresse Ax zugeordneten Datensatzes Dx über den Ausgangsgeber 4 zur Ansteuerung einer Funktionseinheit 5.

Die Ansteuerung des Rücksetzeinganges 111.13 der Blockier-Kippstufe 111 ist allerdings wirkungslos, wenn der Adressensprung in eine Adresse Ax erfolgte, deren Datensatz Dx seinerseits der Abfrage eines weiteren Sprungbefehlsgebers 6 zugeordnet ist. Denn dann ändert sich mit Durchführung des Adressensprunges lediglich die Zuordnung des Abfrage-Quittiersignals am Quittungs-Gebereingang 7.3, und der gegenüber dem Rücksetzeingang 111.13 dominierende Setzeingang 111.3 bleibt angesteuert. Das Ausgangssignal der Verzögerungsstufe 13 ist in diesem Fall wirkungslos, und zum Zeitpunkt des Erscheinens des Übergabesignals T' ist der Ausgangsgeber 4 weiterhin über seinen Blockiereingang 4.7 gesperrt.

Anstelle der Ansteuerung einer Funktionseinheit 5 erfolgt in diesem Fall zu Beginn des nächsten Funktions-Zyklus der Taktschaltung 8, also mit Erscheinen des nächstfolgenden Fortschaltsignals T, zunächst ein Weiterschalten in die Folgeadresse Ax+1. Unter dieser ist als Datensatz Dx+1 die weitere Sprungadresse Ay abgespeichert. Aufgrund Abfrage des weiteren Sprungbefehlsgebers 6 unter der Adresse Ax ist die UND-Schaltung 112 zur Auslösung eines Setzsignals vorbereitet, und diese Weiterschaltung in die Folgeadresse Ax+1 zu Beginn des nächsten Funktions-Zyklus führt zur Ansteuerung der Verzögerungsschaltung 119. Zeitversetzt dagegen, wenn also der Datensatz Dx+1 als neue Zählstellung schon am Übernahmeeingang 2.2 des Adressenzählers 2 ansteht, wird wieder ein Setzsignal über den Setzausgang 7.2 auf den Übergabe-Setzeingang 2.7 durchgeschaltet, der weitere Adressensprung also ebenso wie beschrieben durchgeführt.

Wenn der dieser weiteren Sprungadresse Ay zugeordnete Datensatz Dy dagegen nicht wiederum die Abfrage eines Sprungbefehlsgebers 6 zum Inhalt hat, sondern die Ansteuerung einer Funktionseinheit 5 über einen Ausgangsgeber 4, wird kurz darauf, noch ehe innerhalb des momentan ablaufenden Zyklus das Übergabesignal T' erscheint, über die Verzögerungsstufe 113 die Blockier-Kippstufe 111 zurückgesetzt, das Blockiersignal am Blockiereingang 4.7 also zurückgenommen. Mit Erscheinen des Übergabesignals T' innerhalb des aktuellen Zyklus der Taktschaltung 8 folgt dann also eine Ausgabe entsprechend dem Datensatz Dy unter der neuen Sprungadresse Ay.

Die erfindungsgemäße Schaltanordnung zum Ausführen von Adressen-Sprungbefehlen bei speicherprogrammierten Folgesteuerungen eignet sich besonders vorteilhaft auch zur Realisierung von einfachen oder voneinander abhängigen Unterbrechungs- oder Wartezeichen im Zuge des Funktionsablaufes einer Folgesteuerung. Gemäß dem dargestellten Ausführungsbeispiel sind dafür bevorzugt an unterschiedliche Funktionseinheiten 5 unterschiedlich dimensionierte Zeitglieder 120 angeschlossen, die beispielsweise aus einer R-C-Integrierschaltung, mit nachgeschalteter Schwellwertstufe zur Erzeugung einer steilen Impulsflanke, bestehen und über ein NAND-Gatter 121 zusammengefaßt sind. Dieses kann selbst als Sprungbefehlsgeber 6 ausgebildet sein oder einem an die Abfrageschaltung 3 angepaßten Sprungbefehlsgeber 6 vorgeschaltet sein, im dargestellten Beispielsfalle dem Sprungbefehlsgeber 6, der bei Erreichen der Adresse An+1 im Speicher 1 angesteuert und abgefragt wird.

Bei Erreichen dieser Adresse An+1 liefert die Geber-Abfrageschaltung 3 erst dann an den Sprungbefehlseingang 7.6 ein Signal zum Durchführen eines Adressensprunges, wenn sie nach Ablauf der vorgegebenen Zeitspanne ab Ansteuerung der entsprechend beschalteten Funktionseinheit 5 abgefragt wird. Bei Auftreten des nächsten Fortschaltsignals T erfolgt wie oben beschrieben, die Weiterschaltung auf die folgende Adresse An+2 zur Durchführung des Sprunges auf die Sprungadresse Ax zwecks Fortsetzung des im Speicher 1 abgespeicherten Programmablaufes. Dabei können sich, wie beschrieben, aufgrund der Wirkung der Verzögerungsschaltung 119 weitere Adressensprünge unmittelbar anschließen, also ohne Erfordernis des Einschaltens irgendwelcher zusätzlicher Zwischenschritte wie etwa zum Umspeichern von Informationen; oder es kann dieser Adressensprung so vorgegeben sein, daß noch im Zuge des aktuellen Funktions-Zyklus mit Auftreten des Übergabesignals T' eine Funktionseinheit 5 angesteuert wird. Bei dieser dann angesteuerten Funktionseinheit 5 kann es sich abermals um eine solche handeln, die mit einem Zeitglied 120 beschaltet ist, um eine weitere Unterbrechungs- oder Verzögerungsperiode unmittelbar an die vorangegangene anzuschließen.

Wenn für die Dauer einer solchen durch die Dimensionierung des Zeitgliedes 120 bestimmten Zeitspanne bis zum Erscheinen des Sprungbefehls am Sprungbefehlseingang 7.6 in der Speicher-Adresse An+1 verharrt wird, die über den zugeordneten Datensatz Dn+1 zur Abfrage eines mit einem Zeitglied 120 beschalteten Sprungbefehlsgebers 6 führt, um nach Ablauf dieser Zeitspanne in die Folgeadresse An+2 weiterzuschalten und die dort abgespeicherte Sprungadresse Ax=Dn+2 abzufragen, also den Adressensprung durchzuführen, kann es zweckmäßig bzw. erwünscht sein, während dieser Zeitspanne bis zur verzögerten Durchführung des Adressensprunges die Ansteuerung der Taktschaltung 8 aus dem Impulsgenerator 9 über den Takteingang 8.9 zu unterbrechen. Dafür ist beim dargestellten Ausführungsbeispiel eine Unterbrechungsschaltung 122 einem Stopeingang 9.5 des Impulsgenerators 9 vorgeschaltet. In der Prinzipdarstellung der Zeichnung besteht diese Unterbrechungsschaltung 122 aus einem ODER-Gatter 123, das den Ausgängen von solchen Funktionseinheiten 5 nachgeschaltet ist, die mit Zeitgliedern 120 beschaltet sind. Sobald eines dieser Zeitglieder 120 aufgrund Anwahl einer Funktionseinheit 5 vom Programm-Speicher 1 her angesteuert wird, wird ein dem Stopeingang 9.5 vorgeschalteter Speicher 124 gesetzt, der die Ansteuerung der Taktschaltung 8 in der Adressen-Fortschalteinrichtung 2' erst dann wieder freigibt, wenn mit Durchschalten des NAND-Gatters 121 dieser Speicher 124 wieder zurückgesetzt wird.

## Patentansprüche

1. Verfahren zum Ausführen eines Adressen-Sprungbefehles bei einer speicherprogrammierten Folgesteuerung für Funktionsabläufe bei Werkzeug- oder Arbeitsmaschinen, insbesondere für Industrienähmaschinen, mittels eines hinsichtlich seiner momentan erreichten Zählstellung entweder schrittweise weiterzählbaren oder modifizierbaren Adressenzählers (2) und mittels eines dem Adressenzähler (2) nachgeschalteten Programm-Speichers (1), in dem Adressen-Datensätze der Ansteuerung eines Ausgangsgebers (4) bzw. der Ansteuerung und Abfrage einer Sprungbefehlsgeber-Abfrageschaltung (3) zugeordnet sind, wobei bei Erreichen einer Adresse (A), deren Datensatz der Ansteuerung und Abfrage eines Sprungbefehlsgebers (6) zugeordnet ist, und bei Vorliegen eines Sprungbefehles von diesem Sprungbefehlsgeber (6) ein Signal zum Umwandeln der momentanen Adressenzähler-Zählstellung in eine solche Zählstellung, die die Sprungadresse (Ax, Ay) darstellt, ausgelöst wird, dadurch gekennzeichnet, daß bei Abfrage des Vorliegens eines Sprungbefehles ein Setzsignal vorbereitet und der Adressenzähler (2) innerhalb einer Adressen-Fortschalteinrichtung (2') auf die nächstfolgende Adresse (A) in seiner Zählfolge weitergeschaltet wird, daß der dieser nächstfolgenden Adresse (A) im Programmspeicher zugeordnete Datensatz als die Sprungadresse (Ax, Ay) in Form einer neuen Adressenzähler-Zählstellung auf einen Übernahmeeingang (2.2) des Adressenzählers (2) geschaltet wird, daß der Adressenzähler (2) vom Setzsignal zur Übernahme dieser anliegenden Sprungadressen-Zählstellung als seine neue Zählstellung angesteuert wird und daß in der Adressen-Fortschalteinrichtung (2') zwischen jeweils zwei Fortschaltsignalen (T, T1) für den Übergang von einer Adressenzähler-Zählstellung auf die nächstfolgende Zählstellung ein Übergabesignal (T', T4) erzeugt wird, welches den Ausgangsgeber (4) zur Ansteuerung von elektrisch ansteuerbaren Funktionseinheiten (5) nach Maßgabe des momentan im Programm-Speicher (1) abgefragten Datensatzes (Dn) freigibt, wenn nicht der Ausgangsgeber (4) gesperrt ist, weil dieser Datensatz (Dn) der Abfrage eines Sprungbefehlsgebers (6) zugeordnet ist.

2. Verfahren nach Anspruch 1, dadurch gekennzeichnet, daß vor Auftreten des Übergabesignals (T4) ein Verriegelungssignal (T2) erzeugt wird, das aufgrund Ansteuerung eines Sprungbefehlsgebers (6) vom Speicher (1) aus den Ausgangsgeber (4) blockiert, bis die neue Adresse (A) erreicht ist.

3. Verfahren nach Anspruch 2, dadurch gekennzeichnet, daß nach dem ersten Verriegelungssignal (T2) und vor dem Übergabesignal (T4) ein weiteres Verriegelungssignal (T3) erzeugt wird, das nach Durchführung eines ersten Sprunges auf eine Sprungadresse (Ax) freigegeben wird, wodurch ein weiterer Sprung unmittelbar nach dem ersten Sprung durchgeführt werden kann.

4. Verfahren nach Anspruch 1, dadurch gekennzeichnet, daß das vorbereitete Setzsignal auf den Adressenzähler (2) durchgeschaltet wird, wenn am gerade abgefragten Sprungbefehlsgeber (6) der Sprungbefehl bei Übergang auf die nächstfolgende Adresse (A) noch ansteht, wodurch eine kurze Zeitverzögerung hervorgerufen wird, die ein Fortschalten in die nächste Adresse (An+2) ermöglicht, in der als Datensatz (Dn+2) die vom Adressenzähler als neue momentane Zählstellung zu übernehmende Sprungadresse (Ax) steht.

5. Verfahren nach einem der vorangehenden Ansprüche, dadurch gekennzeichnet, daß während Anwahl eines Sprungbefehlsgebers (6) ein Ausgangsgeber-Blockiersignal gesetzt wird, das nach Durchschalten des Setzsignals zurückgenommen wird, ehe vor Beginn eines nächstfolgenden Fortschaltsignals (T) ein Übergabesignal zur Ausgangsgeber-Freigabe erzeugt wird, wodurch mit der Anwahl des Sprungbefehlsgebers (6) der Ausgangsgeber (4) blockiert wird.

6. Verfahren nach einem der vorangehenden Ansprüche, dadurch gekennzeichnet, daß von Ausgangsgebern (4) über Zeitglieder (120) Sprungbefehlsgeber (6) angesteuert werden, wodurch Zeitverzögerungen im Ablauf eines Fortschaltprogramms zur Durchführung eines Folgesteuerungs-Sprungbefehls erzeugt werden.

7. Folgesteuerungs-Schaltanordnung für Funktionsabläufe bei Werkzeug- oder Arbeitsmaschinen, insbesondere bei Industrienähmaschinen, zum Ausüben des Verfahrens nach Anspruch 1, mit einem Programm-Speicher (1), der an eine Adressen-Fortschalteinrichtung (2') mit auf vorgebbare Zählstellungen setzbarem Adressenzähler (2) sowie an, vom Programm-Speicher (1) gemäß dem Datensatz unter einer erreichten Adresse (A) gezielt abfragbare, Sprungbefehlsgeber (6) und an einen, vom Programm-Speicher (1) gemäß dem Datensatz unter einer erreichten Adresse (A) gezielt ansteuerbaren, Ausgangsgeber (4) angeschlossen ist, wobei der Adressenzähler (2) ausgangsseitig an einen Adresseneingang (1.2) des Programm-Speichers (1) und mit seinem Übernahmeeingang (2.2) an einen Datenausgang (1.1) des Programm-Speichers (1) und mit seinem Zählsignaleingang (2.8) an einen Fortschaltausgang (8.2) einer Taktschaltung (8) und mit seinem Übergabeeingang (2.7) an einen über Sprungbefehlsgeber-Abfrageschaltungen (3) angesteuerten Setzausgang (7.2) angeschlossen ist, und wobei die Adressen-Fortschalteinrichtung (2') für zyklische Abgabe von Fortschaltsignalen (T, T1) an den Adressenzähler-Zählsignaleingang (2.8) ausgelegt ist, dadurch gekennzeichnet, daß im Programm-Speicher (1) unter derjenigen Adresse (An+2), die gemäß der Zählstellungs-Zählfolge des Adressenzählers (2) auf die der Abfrage eines Sprungbefehlsgebers (6) zugeordnete Adresse (An+1) folgt, als Datensatz (Dn+2) die Sprungadresse (Ax) abgespeichert ist, und daß bei Vorliegen eines Sprungbefehls vom durch die momentan erreichte Adresse (An+1) im Programm-Speicher (1) abgefragten Sprungbefehlsgeber (6) ein Setzsignal erzeugt wird, das in der nächstfolgenden Zählstellung des Adressenzählers (2) dessen Übergabeeingang (2.7) zum Setzen des Adressenzählers (2) auf die Sprungadresse (Ax) als neue Zählstellung ansteuert, und daß die Adressen-Fortschalteinrichtung (2') für zyklische Abgabe einer Folge von Taktperioden (Z) mit einem Fortschaltsignal (T, T1) an ihrem Fortschaltausgang (8.2), um den Adressenzähler (2) um einen Zählschritt weiterzuschalten, und mit einem Übergabesignal (T', T4) an einem Freigabeausgang (8.4) ausgelegt ist, um den Ausgangsgeber (4) zur Ansteuerung von elektrisch ansteuerbaren Funktionseinheiten (5) nach Maßgabe des momentan im Programmspeicher (1) abgefragten Datensatzes (Dn) freizugeben, wenn nicht an einem Blockiereingang (4.7) ein Blockiersignal ansteht, weil dieser Datensatz (Dn) der Abfrage eines Sprungbefehlsgebers (6) zugeordnet ist.

8. Schaltanordnung nach Anspruch 7, dadurch gekennzeichnet, daß die Adressen-Fortschalteinrichtung (2') zur Abgabe eines Verriegelungssignals (T2) an einem Verriegelungsausgang (8.7), um den Ausgangsgeber (4) bei momentaner Abfrage eines Sprungbefehlsgebers (6) zu blockieren, zwischen dem Fortschaltsignal (T1) und dem Übergabesignal (T4) ausgelegt ist und der Sprungbefehlsgeber-Abfrageschaltung (3) eine Verriegelungsschaltung (7) mittels derer nach Maßgabe der Information des Sprungbefehlsgebers (6) unter Abkehr vom Weiterschalten auf die nächstfolgende Adresse (An+3) die Durchführung eines Sprunges auf eine Sprungadresse (Ax) vorgenommen oder unterdrückt wird, zur Erzeugung eines Setzsignals, das ein Weiterzählen des Adressenzählers (2) verhindert, wenn die Übernahme der Sprungadresse (Ax) in den Adressenzähler (2) vom Sprungbefehlsgeber (6) gefordert wird, und eines Blockiersignals, das über die Geber-Abfrageschaltung (3) ausgelöst, den Ausgangsgeber (4) blockiert, nachgeschaltet ist, wobei die Verriegelungsschaltung (7) einen, der Sprungbefehlsgeber-Abfrageschaltung (3) nachgeschalteten, Quittungs-Gebereingang (7.3), einen dem Sprungbefehlsgeber (6) nachgeschalteten Sprungbefehlseingang (7.6), einen vom Quittungs-Gebereingang (7.3) angesteuerten und auf einen Blockiereingang (4.7) des Ausgangsgebers (4) geschalteten Blockierausgang (7.4) sowie einen dem Verriegelungsausgang (8.7) nachgeschalteten Verriegelungseingang (7.8) aufweist, der mit dem Sprungbefehlseingang (7.6) über eine Verknüpfungsschaltung auf einen Setzausgang (7.2) und mit dem Quittungs-Gebereingang (7.3) über eine Blockierschaltung auf den Blockierausgang (7.4) geschaltet ist.

9. Schaltanordnung nach Anspruch 8, dadurch gekennzeichnet, daß die Verriegelungsschaltung (7) als Verknüpfungsschaltung und als Blockierschaltung je ein zweistufiges Schieberegister (11, 12) aufweist, deren Takteingänge (11.8, 12.8) dem Verriegelungseingang (7.8) nachgeschaltet und deren Löscheingänge (11.13, 12.13) über eine Verzögerungsstufe (13) dem Setzausgang (7.2) parallelgeschaltet sind, wobei das erste Schieberegister (11) mit seinem Informationseingang (11.3) an den Quittungs-Gebereingang (7.3) und mit seinen Ausgängen (11.1, 11.2) über eine ODER-Schaltung (14) an den Blockierausgang (7.4) angeschlossen und das zweite Schieberegister (12) mit seinem Informationseingang (12.3) an den Sprungbefehlseingang (7.6) und mit seinem zweiten Ausgang (12.2) an den Setzausgang (7.2) angeschlossen ist.

10. Schaltanordnung nach Anspruch 9, dadurch gekennzeichnet, daß wenigstens ein weiterer Verriegelungsausgang (8.16) für ein weiteres Verriegelungssignal (T3) vorgesehen ist und beide Verriegelungsausgänge (7.8, 7.16) über ein ODER-Glied (15) zusammengefaßt sind, wobei dem weiteren Verriegelungseingang (7.16) eine an den Blockierausgang (7.4) angeschlossene Blockierstufe (16) nachgeschaltet ist.

11. Schaltanordnung nach Anspruch 8, dadurch gekennzeichnet, daß einem Sprungbefehlseingang (7.6) der Verriegelungsschaltung (7) ein Informations-Vorbereitungseingang (112.3) einer UND-Schaltung (112) nachgeschaltet ist, die einen auf erneutes Erscheinen eines Adressen-Fortschaltsignals (T) ansprechenden Freigabeeingang (112.2) aufweist und ausgangsseitig über eine Verzögerungsschaltung (119) zur verzögerten Ansteuerung ohne Zwischenspeicherung auf den Setzausgang (7.2) der Verriegelungsschaltung (7) geschaltet ist.

12. Schaltanordnung nach Anspruch 11, dadurch gekennzeichnet, daß eine Blockier-Kippstufe (111) mit dominierendem Setzeingang (111.3) dem Quittungs-Geber-Eingang (7.3) der Verriegelungsschaltung (7) nachgeschaltet und ausgangsseitig auf den Blockierausgang (7.4) geschaltet ist, wobei ein Rücksetzeingang (111.13) über eine Verzögerungsstufe (13) an den Setzausgang (7.2) angeschlossen ist.

13. Schaltanordnung nach einem der Ansprüche 7 bis 12, dadurch gekennzeichnet, daß dem Ausgangsgeber (4) wahlweise ansteuerbare Zeitglieder (120) nachgeschaltet sind, die auf Sprungbefehlsgeber (6) geschaltet sind.

## Claims

1. Method of executing an address transfer instruction in a storedprogram sequence control system for operating sequences or cycles in machine tools or working machines, particularly industrial sewing machines, by means of a location counter (2), which can either continue counting stepwise or can be modified with respect to its instantaneously reached counting position, and by means of a program register (1) which is arranged after the location counter (2) in the system and in which address data records are associated with the drive of an output generator (4) or with the drive and inquiry of an address generator inquiry circuit (3), a signal for converting the instantaneous counting position of the location counter into that counting position representing the transfer address (Ax, Ay) being triggered by a transfer instruction or address generator (6) when an address (A) whose data record is associated with the drive and inquiry of the said transfer instruction or address generator (6) is reached and when a transfer instruction is present, characterised in that upon inquiry as to the presence of a transfer instruction, a set signal is prepared and the location counter (2) within the address advance facility (2') is transferred to the following address (A) in its counting sequence, that the data record associated with this following address (A) in the program register is switched, as the transfer address (Ax, Ay) in the form of a new counting position of the location counter, to a transfer input (2.2) of the location counter (2), that the location counter (2) is triggered or driven by the set signal to take over this adjacent transfer address counting position as its new counting position, and that a transfer signal (T', T4) is generated in the address advance facility (2') between each pair of advance signals (T, T1) for the transition from one counting position of the location counter to the following counting position, which transfer signal releases the output generator (4) to trigger or drive electrically drivable functional units (5) in accordance with the data record (Dn) interrogated instantaneous-

14

ly in the program register (1), unless the output generator (4) is inhibited, because this data record (Dn) is associated with the interrogation of a transfer instruction transmitter (6).

2. Method according to Claim 1, characterised in that, prior to the generation of the transfer signal (T4), a blocking signal (T2) is generated which, as a result of a transfer instruction transmitter (6) being triggered from the register (1), inhibits the output generator (4) until the new address (A) is reached.

3. Method according to Claim 2, characterised in that, after the first blocking signal (T2) and before the transfer signal (T4), a further blocking signal (T3) is generated which is released after a first transfer to a transfer address (Ax) is performed, whereby a further transfer can be performed immediately after the first transfer.

4. Methed according to Claim 1, characterised in that the prepared set signal is switched through to the location counter (2) when, at the just interrogated transfer instruction transmitter (6), the transfer instruction is still delayed in transfer to the following address (A), thereby causing a short time lag which enables an advance into the next address (An + 2) in which the transfer address (Ax) which is to be taken over by the location counter as the new temporary cointing position, is in the form of a data record (Dn + 2).

5. Method according to any one of the preceding Claims, characterised in that an inhibiting signal for blocking the output generator or transmitter, which signal is cancelled after the set signal is switched through, is set during selection of a transfer instruction transmitter (6) before a transfer signal is generated to release the output generator prior to commencement of a following advance signal (T) whereupon the output generator (4) is blocked by the selection of the transfer instruction transmitter (6).

6. Method according to any one of the preceding Claims, characterised in that transfer instruction transmitters (6) are triggered by output generators (4) via time function elements (120), thereby producing time delays in the course of an advance program to perform a sequence control transfer instruction.

7. Sequence control circuit arrangement for functional or operating sequences in machine tools or working machines, particularly in industrial sewing machines, for carrying out the method according to Claim 1, comprising a program register (1) which is connected to an address advance facility (2') having a location counter (2) which can be set at pre-settable counting positions, and to transfer instruction transmitters (6) which can be interrogated specifically by the program register (1) in accordance with the data record under an address (A) reached, and to an output generator (4) which can be triggered specifically by the program register (1) in accordance with the data record under an address (A) reached, the location counter (2) being connected on the output side to an adress input (1.2) of the program register (1) and by its transfer input (2.2) to a data output (1.1) of the program register (1) and by its counting signal input (2.8) to an advance output (8.2) of a clock or timing circuit (8) and by its transfer input (2.7) to its set output (7.2) which is triggered via inquiry circuits (3) for interrogating transfer instruction transmitters, and the address advance facility (2') being designed for cyclic transmission of advance signals (T, T1) to the counting signal input (2.8) of the location counter, characterised in that, in the program register (1) under that address (An + 2) which, in the counting position/counting sequence of the location counter (2), follows the address (An + 1) associated with the interrogation of a transfer instruction transmitter (6), the transfer address (Ax) is registered as a data record (Dn + 2), and that, when a transfer instruction is present, the transfer instruction transmitter (6) which is interrogated by the currently reached address (An + 1) in the program register (1) generates a set signal which, in the following counting position of the address counter (2), triggers its transfer input (2.7) to set the address counter (2) for the transfer address (Ax) as the new counting position, and that the address advance facility (2') is designed for the cyclic transmission of a sequence of elementary periods (Z) by an advance signal (T, T1) to its advance output (8.2), in order to move the address counter (2) by one further counting step, and by a transfer signal (T', T4) to a release or enable output (8.4), in order to release the output generator (4) to trigger electrically drivable functional units (5) in accordance with the data record (Dn) currently interrogated in the program register (1), unless an inhibiting signal is generated at an inhibiting input (4.7), because this data record (Dn) is associated with the interrogation of a transfer instruction transmitter (6).

8. Circuit arrangement according to Claim 7, characterised in that the address advance facility (2') is designed to transmit a blocking signal (T2), between the advance signal (T1) and the transfer signal (T4), to a blocking output (8.7) in order to block the output generator (4) upon current interrogation of a transfer instruction transmitter (6), and the inquiry circuit (3) for interrogating the transfer instruction transmitter is followed by a blocking circuit (7), by means of which the performance of a transfer to a transfer address (Ax) is effected or suppressed in accordance with the data of the transfer instruction transmitter (6) while avoiding further movement or advance to the following address (An + 3), to generate a set signal, which prevents further counting of the address counter (2) when the transfer of the transfer address (Ax) into the address counter (2) is required by the transfer instruction transmitter (6), and a blocking signal which, triggered via the transmitter inquiry circuit (3), blocks the output generator (4), the blocking circuit (7) comprising an acknowledgment or identification transmitter input (7.3) arranged after the transfer instruction transmitter inquiry circuit (3) in the system, a transfer instruction input (7.6) arranged after the transfer instruction transmitter (6), an inhibiting output (7.4) which is triggered by the acknowledgment transmitter input (7.3) and switched to an inhibiting input (4.7) of the output generator (4), and a blocking input (7.8) which is arranged after the blocking output (8.7) and which, with the transfer instruction input (7.6), is switched to a set output (7.2) via a combinatorial circuit and, with the acknowledgment transmitter input (7.3), is switched to the inhibiting output (7.4) via an inhibiting circuit.

9. Circuit arrangement according to Claim 8, characterised in that the blocking circuit (7), acting as a combinatorial circuit and an inhibiting circuit, comprises in each case a two-stage shift register (11, 12), the timing inputs (11.8, 12.8) of thich are arranged after the blocking input (7.8) and the erase or reset inputs (11.13, 12.13) of which are connected in parallel with the set output (7.2) via a delay stage (13), the first shift register (11) being connected by its information input (11.3) to the acknowledgment transmitter input (7.3) and by its outputs (11.1, 11.2) to the inhibiting output (7.4) via an OR circuit (14) and the second shift register (12) being connected to the transfer instruction input (7.6) by its information input (12.3) and to the set output (7.2) by its second output (12.2).

10. Circuit arrangement according to Claim 9, characterised in that at least one further blocking output (8.16) is provided for a further blocking signal (T3) and the two blocking outputs (7.8, 7.16) are combined via an OR-element (15), the second blocking input (7.16) being followed by an inhibiting stage (16) connected to the inhibiting output (7.4).

11. Circuit arrangement according to Claim 8, characterised in that a transfer instruction input (7.6) of the blocking circuit (7) is followed in the system by an information or data preparation input (112.3) of an AND circuit (112) which comprises a release input (112.2), which responds to the reappearance of an address advance signal (T), and, on the output side, is switched to the set output (7.2) of the blocking circuit (7) via a delay circuit (119) for delayed triggering or drive without intermediate storage.

12. Circuit arrangement according to Claim 11, characterised in that an inhibiting trigger circuit (111) having a dominant set input (111.3) is arranged after the acknowledgment transmitter input (7.3) of the blocking circuit (7) and, on the output side, is switched to the inhibiting output (7.4), a reset input (111.13) being connected to the set output (7.2) via a delay stage (13).

13. Circuit arrangement according to any one of the Claims 7 to 12, characterised in that the output generator (4) is followed in the system by selectively drivable time function elements (120) which are switched to transfer instruction transmitters (6).

## Revendications

1. Procédé pour l'exécution d'un saut d'adresse dans un dispositif de commande séquentielle programmé en mémoire pour le déroulement des fonctions de machines-outils ou de machines opératrices, en particulier de machines à coudre industrielles, au moyen d'un compteur d'adresses (2) qui, à partir d'une situation de comptage d'un instant, peut continuer de compter ou dont la situation de comptage peut être modifiée, et au moyen d'une mémoire de programme (1) branchée à la suite du compteur d'adresses (2), dans laquelle des expressions de données d'adresse sont associées à la commande d'un émetteur (4) de signaux de sortie, respectivement à l'attaque et à l'interrogation d'un circuit (3) de commande d'un émetteur d'ordre de saut, où, lorsqu'est atteinte une adresse (A) dont l'expression de données est associée à l'ataque et à l'interrogation d'un émetteur (6) d'ordre de saut, et où, lorsqu'il y a présence d'un ordre de saut émanant de cet émetteur (6) d'ordre de saut, un signal est délivré pour la transformation de la situation de comptage instantanée du compteur d'adresses en une situation de comptage qui représente l'adresse du saut (Ax, Ay), caractérisé en ce que, lors de l'interrogation quant à la présence d'un ordre de saut, un signal d'établissement est préparé et le compteur d'adresses (2), à l'intérieur d'un dispositif (2') d'avance d'adresse, est passé sur l'adresse (A) immédiatement suivante de sa séquence de comptage; en ce que l'expression de données associée à cette adresse (A) immédiatement suivante dans la mémoire de programme est branchée sous forme d'une nouvelle situation de comptage comme adresse du saut (Ax, Ay), du compteur d'adresses, sur une entrée de transfert (2.2) du compteur d'adresses (2); en ce que le compteur d'adresses (2) est commandé par le signal d'établissement pour prendre comme sa nouvelle situation de comptage cette situation de comptage d'adresse du saut qui lui est proposée; et en ce que, dans le dispositif (2') d'avence d'adresse, entre chaque fois deux signaux d'avance (T, T1) pour le passage d'une situation de comptage du compteur d'adresses à la situation de comptage immédiatement suivante, est engendré un signal de transfert (T', T4) qui libère l'émetteur de signaux de sortie (4) pour la commande d'unités fonctionnelles (5) susceptibles d'être commandées électriquement suivant l'expression de données (Dn) extraites à l'instant de la mémoire de programme (1), lorsque l'émetteur de signaux de sortie (4) n'est pas bloqué, vu que cette expression de données (Dn) est associée à la consultation d'un émetteur d'ordre de saut (6).

2. Procédé suivant la revendication 1, caractérisé en ce qu'avant l'apparition du signal de transfert (T4) est engendré un signal de verrouillage (T2) qui, sur la base de l'interrogation d'un émetteur d'ordre de saut (6) par la mémoire (1), bloque l'émetteur de signaux de sortie (4) jusqu'à ce que soit atteinte la nouvelle adresse (A).

3. Procédé suivant la revendication 2, caractérisé en ce qu'après le premier signal de verrouillage (T2) et avant le signal de transfert (T4), est engendré un autre signal de verrouillage (T3) qui est libéré après l'exécution d'un premier saut à une adresse de saut (Ax), ce qui fait qu'un autre saut peut être exécuté immédiatement après le premier saut.

4. Procédé suivant la revendication 1, caractérisé en ce que le signal d'établissement préparé est transmis au compteur d'adresses (2) lorsque, dans l'émetteur d'ordre de saut (6) qui vient d'être interrogé, l'ordre de saut est encore en attente, lors du transfert à l'adresse immédiatement suivante (A), ce qui fait qu'est provoqué un court retard qui permet une avance à l'adresse suivante (An+2) dans laquelle se trouve, comme expression de données (Dn+2), l'adresse du saut (Ax) à prendre par le compteur d'adresses comme nouvelle position de comptage instantanée.

5. Procédé suivant l'une quelconque des renvendications précédentes, caractérisé en ce que, pendant la sélection d'un émetteur d'ordre de saut (6) est établi un signal de blocage d'émetteur de signaux de sortie qui est retiré après passage du signal d'établissement, avant que, antérieurement au commencement d'un signal d'avance (T) immédiatement suivant, soit émiun signal de transfert pour la libération de l'émetteur de signaux de sortie, ce quit fait qu'avec la sélection de l'émetteur d'ordre de saut (6), l'émetteur de signaux de sortie (4) soit bloqué.

6. Procédé suivant l'une quelconque des revendications précédentes, caractérisé en ce que des émetteurs d'ordre de saut (6) sont commandés par l'émetteur de signaux de sortie (4) par l'intermédiaire d'éléments temporels (120), de sorte que des retards soient produits dans le déroulement d'un programme d'avance pour l'exécution d'un ordre de saut de commande séquentielle.

7. Agencement de circuit de commande séquentielle pour le déroulement des fonctions de machinesoutils ou de machines opératrices, en particulier de machines à coudre industrielles, pour l'exécution du procédé suivant la revendication 1, avec une mémoire de programme (1) raccordée à un dispositif d'avance d'adresses (2) qui peut être établi à des situations de comptage fixables à l'avance, ainsi que raccordée à des émetteurs d'ordre de saut (6) pouvant être interrogés par la mémoire de programme (1) suivant l'expression de données sous une adresse atteinte (A), et raccordée à un émetteur de signaux de sortie (4) susceptible d'être commandé par la mémoire de programme (1) suivant l'expression de données sous une adresse atteinte (A), le compteur d'adresses (2) étant raccordé, du côté de la sortie, à une entrée d'adresse (1.2) de la mémoire de programme (1)

et par son entrée de transfert (2.2) à une sortie de données (1.1) de la mémoire de programme (1), et par son entrée de signal de comptage (2.8) à une sortie d'avance (8.2) d'un circuit de synchronisation (8), et avec son entrée de transfert (2.7) à une sortie d'établissement (7.2) commandée par l'intermédiaire de circuits (3) d'interrogation d'émetteurs d'ordre de saut, et où le dispositif d'avance d'adresses (2') est agencé pour la fourniture cyclique de signaux d'avance (T, T1) à l'entrée de signal de comptage (2.8) du compteur d'adresses, caractérisé en ce que dans la mémoire de programme (1), sous l'adresse (An+2) qui, suivant la séquence de comptage de situations de comptage du compteur d'adresses (2), fait suite à l'adresse (An+1) associée à l'interrogation d'un émetteur d'ordre de saut (6), l'adresse du saut (Ax) est emmagasinée comme expression de données (Dn+2); et en ce que, lors de la présence d'un ordre de saut provenant de l'émetteur d'ordre de saut (6) interrogé par l'adresse (An+1) atteinte à l'instant dans la mémoire de programme (1), est engendré un signal d'établissement qui, dans la situation de comptage immédiatement suivante du compteur d'adresses (2), attaque son entrée de transfert (2.7) pour établir le compteur d'adresses (2) à l'adresse du saut (Ax) comme nouvelle situation de comptage; et en ce que le dispositif d'avance d'adresses (2') pour la délivrance caclique d'une suite de périodes de synchronisation (Z), est conçu avec un signal d'avancement (T, T1) sur sa sortie d'avancement (8.2) pour faire avancer le compteur d'adresses (2) d'un pas de comptage, et avec un signal de transfert (T', T4) à une sortie de libération (8.4) pour libérer l'émetteur de signaux de sortie (4) pour la commande d'unités fonctionnelles (5) commandables électriquement, suivant l'expression de données (Dn) extraite à l'instant de la mémoire de programme (1), lorsqu'il n'y a pas de signal de blocage sur une entrée de blocage (4.7), vu que cette expression de données (Dn) est associée à l'interrogation d'un émetteur d'ordre de saut (6).

8. Agencement de circuits suivant la revendication 7, caractérisé en ce que le dispositif (2') d'avance d'adresses est agencé pour délivrer un signal de verrouillage (T2) à une sortie de verrouillage (8.7) pour bloquer l'émetteur de signaux de sortie (4) lors de l'interrogation momentanée d'un émetteur d'ordre de saut (6), entre le signal d'avance (T1) et le signal de transfert (T4); et en ce qu'à la suite du circuit (3) d'interrogation d'émetteur d'ordre de saut est branché un circuit de verrouillage (7) au moyen duquel, suivant l'information de l'émetteur d'ordre de saut (6), en écartant la progression vers l'adresse immédiatement suivante (An+3), l'exécution d'un saut à une adresse de saut (Ax) est entreprise ou supprimée, pour engendrer un signal d'établissement qui empêche une avance du comptage du compteur d'adresses (2) lorsque le transfert de l'adresse du saut (Ax) dans le compteur d'adresses (2) est demandé par l'émetteur d'ordre de saut (6) et pour engendrer un signal de blocage qui, déclenché par le circuit (3) d'interrogation d'émetteur, bloque l'émetteur de signaux de sortie (4), le circuit de verrouillage (7) présentant une entrée d'émetteur d'accusé de réception (7.3) branchée à la suite du circuit (3) d'interrogation d'émetteur d'ordre de saut, une entrée (7.6) d'ordre de saut, branchée à la suite de l'émetteur d'ordre de saut (6), une sortie de blocage (7.4) commandée par l'entrée (7.3) d'émetteur d'accusé de réception et branchée sur une entrée de blocage (4.7) de l'émetteur de signaux de sortie (4), ainsi qu'une entrée de verrouillage (7.8) branchée à la suite de la sortie de verrouillage (8.7), qui est branchée par l'entrée d'ordre de saut (7.6), par l'intermédiaire d'un circuit de logique, à une sortie d'établissement (7.2), et par l'entrée (7.3) d'émetteur d'accusé de réception, par l'intermédiaire d'un circuit de blocage, à la sortie de blocage (7.4).

9. Agencement de circuits suivant la revendication 8, caractérisé en ce que le circuit de verrouillage (7), comme circuit de logique et comme circuit de blocage, présente un registre à décalage (11, 12) à deux étages dont les entrées de synchronisation (11.8, 12.8) sont branchées à la suite de l'entrée de verrouillage (7.8) et dont les entrées d'effacement (11.13, 12.13) sont branchées en parallèle, par l'intermédiaire d'un étage de retard (13), à la sortie d'établissement (7.2), le premier registre à décalage (11) étant raccordé par son entrée d'information (11.3) à l'entrée (7.3) d'émetteur d'accusé de réception et, par ses sorties (11.1, 11.2), par l'intermédiaire d'un circuit OU (14) à la sortie de blocage (7.4), et le deuxième registre à décalage (12) étant raccordé par son entrée d'information (12.3) à l'entrée d'ordre de saut (7.6) et par sa deuxième sortie (12.2) à la sortie d'établissement (7.2).

10. Agencement de circuits suivant le revendication 9, caractérisé en ce qu'est prévue au moins une autre sortie de verrouillage (8.16) pour un autre signal de verrouillage (T3) et en ce que les deux sorties de verrouillage (7.8, 7.16) sont groupées par un élément OU (15), un étage de blocage (16) raccordé à la sortie de blocage (7.4) étant branché à la suite de l'autre entrée de verrouillage (7.16).

11. Agencement de circuits suivant la revendication 8, caractérisé en ce qu'à une entrée d'ordre de saut (7.6) du circuit de verrouillage (7) est raccordée une entrée de préparation d'information (112.3) d'un circuit ET (112) qui présente une entrée de libération (112.2) répondant à une apparition renouvelée d'un signal d'avance d'adresses (T) et qui, du côté de la sortie, est branché, par l'intermédiaire d'un circuit de retard (119), pour la commande retardée sans mise en mémoire intermédiaire, à la sortie d'établissement (7.2) du circuit de verrouillage (7).

12. Agencement de circuits suivant la revendication 11, caractérisé en ce qu'un étage à bascule de blocage (111) à entrée dominante (111.3) est branché à la suite de l'entrée (7.3) de l'émetteur d'accusé de réception du circuit de verrouillage (7) et, du côté de la sortie, à la sortie de blocage (7.4), une entrée de rétablissement (111.13) étant raccordée par un étage de retard (13) à la sortie d'établissement (7.2).

13. Agencement de circuits suivant l'une quelconque des revendications 7 à 12, caractérisé en ce qu'à la suite de l'émetteur de signaux de sortie (4) sont raccordés des éléments temporels (120) susceptibles d'être commandés au choix, qui sont branchés sur des émetteurs d'ordre de saut (6).

FIG. 1

FIG. 2

FIG. 3

23

0 006 488